# EUROPÄISCHE PATENTSCHRIFT

(11) **EP 4 182 770 B1**
(45) Veröffentlichungstag und Bekanntmachung des Hinweises auf die Patenterteilung: **27.12.2023**
(21) Anmeldenummer: 21745724.1
(22) Anmeldetag: 14.07.2021
(51) Int. Cl.: G06F 1/16, E05D 11/00, H01R 13/62, E05D 3/02, H01R 35/04, H01R 31/06

(54) **DREHMOMENTSCHARNIER, VORRICHTUNG MIT DREHMOMENTSCHARNIER UND VERWENDUNG EINES DREHMOMENTSCHARNIERS**
TORQUE HINGE, DEVICE WITH TORQUE HINGE AND USE OF A TORQUE HINGE
CHARNIÈRE DYNAMOMÉTRIQUE, DISPOSITIF POURVU D'UNE CHARNIÈRE DYNAMOMÉTRIQUE ET UTILISATION D'UNE CHARNIÈRE DYNAMOMÉTRIQUE

(30) Priorität: 17.07.2020 EP 20000257
(43) Veröffentlichungstag der Anmeldung: 24.05.2023
(73) Patentinhaber: Systec & Solutions GmbH, 76131 Karlsruhe (DE)
(72) Erfinder: LINDER, Philipp, 76137 Karlsruhe (DE)
(74) Vertreter: mepat Patentanwälte
(86) Internationale Anmeldenummer: PCT/EP2021/069560
(87) Internationale Veröffentlichungsnummer: WO 2022/013271

(56) Entgegenhaltungen:
- US-A- 5 751 544
- US-A- 5 751 544
- US-A1- 2008 076 270
- US-A1- 2018 052 497
- US-A1- 2018 052 497
- US-B1- 6 484 016

## Beschreibung

Die Erfindung betrifft ein Drehmomentscharnier, eine Vorrichtung aus zwei Gegenständen, die über ein Drehmomentscharnier verbunden sind, sowie eine Verwendung eines Drehmomentscharniers zur schwenkbaren sowie elektrischen und/oder elektronischen Verbindung zweier Gegenstände.

Drehmomentscharniere (auch als Friktions-, Konstantmoment-, Reib-, Reibmoment- Positionsscharniere bezeichnet) weisen mechanische Komponenten auf, die es erlauben, einen Gegenstand in Bezug auf einen anderen, durch das Drehmomentscharnier verbundenen Gegenstand in eine beliebige Winkelposition zu bringen und zu positionieren.

Drehmomentscharniere finden sich häufig in Vorrichtungen wie beispielsweise Laptops, bei denen der Bildschirm an einen Grundkörper mit der Tastatur angelenkt ist, sodass der Bildschirm in der gewünschten Winkelposition relativ zum Grundkörper gehalten wird. Ein Drehmomentscharnier umfasst daher Komponenten zum Schwenken, Positionieren und Befestigen.

Grundsätzlich bezeichnet ein Scharnier ein um eine Achse drehbares Gelenk mit mindestens zwei Buchsen, die an den jeweiligen Gegenständen festgelegt werden. Gegebenenfalls können die Buchsen auch an den Gegenständen selbst vorliegen. Ein Drehmomentscharnier weist darüber hinaus zumindest ein Reibelement auf, mit dem in einer der Buchsen bei Drehung um die Achse ein Reibmoment erzeugt wird, das von dem Nutzer zum Schwenken des angelenkten Gegenstands überwunden werden muss, wenn der angelenkte Gegenstand in eine andere Winkelposition überführt werden soll.

Zur Erzeugung des Reibmoments gibt es unterschiedliche Reibelemente, die in Drehmomentscharnieren eingesetzt werden. Ein Reibelement kann, wie beispielsweise aus EP 2 891 029 bekannt, aus mehreren Klemmringen bestehen, die auf einen ersten Abschnitt der Achse aufgepresst werden und mit einer der Buchsen (des ersten Gegenstands) verbunden werden. Der andere Abschnitt der Achse ohne Klemmringe wird in der anderen Buchse (des zweiten Gegenstands) angeordnet. Beim Verschwenken des einen Gegenstands in Bezug auf den anderen um die Achse wird zwischen Achse und den Klemmringen ein gleichförmiges Reibmoment erzeugt.

Andere Beispiele für Reibelemente umfassen Reibscheiben mit einer Wellfeder, die auf einem Abschnitt der Achse gegen einen Anschlag verspannt und mit einer Buchse verbunden werden, oder Spannstifte, die über einem Abschnitt der Achse verpresst und in einer der Buchsen verankert werden. Das Drehmoment wird dabei entsprechend durch die Spannung der Wellfeder bzw. durch Reibung zwischen der Innenfläche des Spannstifts und der Außenseite der Achse erzeugt.

Ferner ist bekannt, eine innenliegende Kabelführung durch ein Drehmomentscharnier vorzusehen, etwa durch eine als Hohlwelle ausgebildete Achse, um zwei Gegenstände - z. B. Monitor und Tastatur eines Laptops - zur Stromversorgung und zur Datenübertragung elektrisch und elektronisch miteinander zu verbinden.

So offenbart beispielsweise US 5,751,544 A ein lösbares Scharnier mit einer innenliegenden Kabelführung zur schwenkbaren sowie elektrischen/elektronischen Verbindung zweier Gegenstände. Dabei weist das Scharnier ein dem ersten Gegenstand zugeordnetes Gelenkgehäuse auf, das reversibel mit röhrenförmigem Abschnitt am zweiten Gegenstand getrennt und verbunden werden kann. Die innenliegende Kabelführung weist an beiden Enden Verbinderelemente zum elektrischen/elektronischen Anschluss an dem ersten und dem zweiten Gegenstand auf.

Aus US 2018/0052497 A1 ist zur schwenkbaren sowie elektrischen/elektronischen Verbindung zweier Gegenstände ein modulares Drehmomentscharnier bekannt, das zwei an einer Schnittstelle reversibel trennbare und verbindbare Gelenkabschnittskörper aufweist, die jeweils einem Gegenstand zugeordnet sind. Eine innenliegende Kabelführung weist an der Schnittstelle der Gelenkabschnittskörper reversibel trenn- und verbindbare elektrische/elektronisches Verbinderelemente auf. Damit die in der Gebrauchsanordnung durch das modulare Scharnier verbundenen Gegenstände verschwenkbar sind, ist das modulare Scharnier als Mehrgelenkscharnier ausgebildet, wobei jeder Gelenkabschnittskörper über ein Hohlachsenelement schwenkbar an dem zugeordneten Gegenstand angelenkt ist. Dabei erstrecken sich elektrische/elektronische Leitungen durch jedes Hohlachsenelement von dem jeweiligen Gegenstand zu den Verbinderelementen an der Schnittstelle des jeweiligen Gelenkabschnittskörper, die an der Schnittstelle starr miteinander verbunden sind.

Ausgehend von diesem Stand der Technik ist es Aufgabe der vorliegenden Erfindung, ein Drehmomentscharnier mit innenliegender Kabelführung bereitzustellen, das einfach schließ- und trennbar und dadurch besonders wartungsfreundlich ist. Dabei soll das Drehmomentscharnier eine verbesserte Staub- und Wasserdichtigkeit zeigen.

Diese Aufgabe wird durch ein Drehmomentscharnier mit den Merkmalen des Anspruchs 1 gelöst.

Die weitere Aufgabe, eine Trennung zweier schwenkbar sowie elektrisch und/oder elektronisch über dein Drehmomentscharnier miteinander verbundenen Gegenständen bereitzustellen, wird durch die Vorrichtung mit den Merkmalen des unabhängigen Anspruchs 11 und die Verwendung eines Drehmomentscharniers mit den Merkmalen des unabhängigen Anspruchs 12 gelöst.

Weiterbildungen der Vorrichtungen sind in den Unteransprüchen ausgeführt.

Eine erste Ausführungsform eines erfindungsgemäßen Drehmomentscharniers, das zur schwenkbaren Verbindung eines ersten Gegenstands mit einem zweiten Gegenstand ausgebildet ist, bezieht sich auf ein Drehmomentscharnier mit einer innenliegenden Kabelführung, die in einer Gebrauchsanordnung des Drehmomentscharniers, in der die Gegenstände über das Drehmomentscharnier verbunden sind, eine elektrische und/oder elektronische - d. h. elektrische oder elektronische oder elektrische und elektronische - Anbindung der Gegenstände bereitstellt.

Unter Gegenständen, die mit einem erfindungsgemäßen Drehmomentscharnier verbunden werden können, werden im Sinne der Erfindung jegliche Arten Artikel und Geräte verstanden, die zumindest eine anschließbare elektrische und/oder elektronische Komponente aufweisen. Die Gegenstände umfassen daher nicht nur Hardwareartikel aus der Informationstechnologie wie Monitore, Tastaturen, Tablets etc., sondern beispielsweise auch Werkzeugartikel wie beispielsweise Leuchten, deren elektrische Komponente zur Stromversorgung eines Leuchtmittels ausgebildet ist, oder Halterungsartikel wie Tragarme, die als elektrische und/oder elektronische Komponente zumindest eine elektrische und/oder elektronische Leitung bzw. Kabel aufweisen.

Das erfindungsgemäße Drehmomentscharnier weist zwei oder gegebenenfalls auch mehr an einer Schnittstelle reversibel trennbare und verbindbare Bauteilgruppen auf, von denen eine erste Bauteilgruppe dem ersten Gegenstand und eine zweite Bauteilgruppe dem zweiten Gegenstand in der Gebrauchsanordnung zugeordnet ist. Die innenliegende Kabelführung weist dabei an der Schnittstelle zumindest ein reversibel trennbares und verbindbares elektrisches und/oder elektronisches Verbinderelementepaar aus einem ersten, der ersten Bauteilgruppe zugeordneten Verbinderelement und einem damit korrespondierenden/dazu komplementären zweiten, der zweiten Bauteilgruppe zugeordneten Verbinderelement auf, sodass die innenliegende Kabelführung entsprechend den Bauteilgruppen in zwei Kabelführungsabschnitte aufgeteilt ist. Das erfindungsgemäße Drehmomentscharnier ermöglicht dadurch vorteilhaft eine einfache Trennung der in der Gebrauchsanordnung angelenkten Gegenstände und gestattet auch wieder eine vorteilhaft einfache Verbindung zur Überführung in die Gebrauchsanordnung. Ferner ermöglicht das erfindungsgemäße Drehmomentscharnier eine mechanische Selbstarretierung und stufenlose Einstellbarkeit der Gegenstände zueinander.

Auch das Abnehmen eines in der Gebrauchsanordnung angelenkten Gegenstands, etwa zum Austauschen des abgenommenen Gegenstands oder zur mobilen Verwendung des abgenommenen Gegenstands (etwa, wenn es sich um ein Tablet handelt), wird dadurch deutlich vereinfacht.

Der Begriff "innenliegende Kabelführung" umfasst dabei alle Kabel und Leitungen, die sich durch das Drehmomentscharnier zum elektrischen/elektronischen Anschließen der Gegenstände erstrecken. Dabei kann es sich um ein Kabel, das eine oder mehrere elektrische und/oder elektronische Einzelleitungen umfasst, oder ggf. auch um zwei oder mehr Kabel handeln, die entsprechend der Bauteilgruppen an der Schnittstelle trennbar ist/sind. Das bzw. jede Kabelführung ist dazu an der Schnittstelle zwischen den Bauteilgruppen in zwei Kabelführungsabschnitte unterbrochen, wobei die Kabelenden an der Schnittstelle mit den jeweilig korrespondierenden Verbinderelementen verbunden sind, sodass die Verbindung der korrespondierenden Verbinderelemente den elektrischen/elektronischen Kontakt der Kabelführungsabschnitte herstellt, und damit die innenliegende Kabelführung bereitstellt.

Das erfindungsgemäße Drehmomentscharnier kann ein Hohlachsenelement, ein Reibelement und zumindest ein erstes und zweites Buchsenelement aufweisen, die zur Verbindung mit den Gegenständen ausgebildet sind. Ggf. kann ein erfindungsgemäßes Drehmomentscharnier auch mehr als zwei Buchsenelemente aufweisen. Das Hohlachsenelement weist einen ersten Abschnitt (Längsabschnitt), der in dem ersten Buchsenelement angeordnet ist, und einen zweiten Abschnitt (Längsabschnitt) auf, der sich in das zweite Buchsenelement erstreckt und an dem das Reibelement in einem Bereich zwischen dem ersten und dem zweiten Buchsenelement angeordnet ist. D. h., dass das Reibelement zwar auf dem zweiten Abschnitt des Hohlachsenelements, aber nicht innerhalb des zweiten Buchsenelements angeordnet ist, zumindest nicht vollständig. Somit kann der zweite Abschnitt des Hohlachsenelements in zwei Bereiche untergliedert werden, in einen mittleren Abschnittsbereich, der benachbart zum ersten Abschnitt ist und an dem das Reibelement angeordnet ist, und einen Endabschnittsbereich, der das dem ersten Abschnitt entgegengesetzte Ende des Hohlachsenelements umfasst und sich in das zweite Buchsenelement erstreckt. Der "Bereich zwischen den Buchsenelementen" umfasst hierbei auch Aufnahmeöffnungen in den einander zugewandten Seiten der Buchsenelemente, die ggf. für einige Komponenten verschiedener Reibelemente vorgesehen sind.

In einer Variante des erfindungsgemäßen Drehmomentscharniers ist das Hohlachsenelement an dem ersten Abschnitt drehfest mit dem ersten Buchsenelement verbunden und der zweite Abschnitt des Hohlachsenelements ist schwenkbar in dem zweiten Buchsenelement aufgenommen, sodass das Reibelement eine mechanische Selbstarretierung und stufenlose Einstellbarkeit des Drehmomentscharniers ermöglicht. In einer anderen Variante des erfindungsgemäßen Drehmomentscharniers ist das Hohlachsenelement als freilaufende Achse ausgebildet, die mit dem ersten Abschnitt in dem ersten Buchsenelement und mit dem zweiten Abschnitt in dem zweiten Buchsenelement schwenkbar aufgenommen ist. In beiden Varianten und insbesondere in der zweiten Variante ist eine - in Bezug zum Hohlachsenelement - axiale Spannvorrichtung wie beispielsweise eine Tellerfeder oder ein Tellerfederpaket an dem zweiten Abschnitt vorgesehen, die für einen konstanten axialen Anpressdruck auf das Reibelement sorgt.

In beiden Varianten weist das Hohlachsenelement eine längsaxiale Durchtrittöffnung auf, durch die sich die innenliegende Kabelführung ebenso wie durch die Buchsenelemente erstreckt.

Dazu kann eine Ausführungsform des erfindungsgemäßen Drehmomentscharniers eine zum elektrischen und/oder elektronischen Anschluss an den ersten Gegenstand ausgebildete Anschlussvorrichtung aufweisen, die in dem ersten Buchsenelement angeordnet und - über einen Teilabschnitt der innenliegenden Kabelführung - mit dem ersten Verbinderelement verbunden ist. Entsprechend kann das erfindungsgemäße Drehmomentscharnier ein zum elektrischen und/oder elektronischen Anschluss an den zweiten Gegenstand ausgebildetes Anschlusselement aufweisen, das in dem zweiten Buchsenelement angeordnet und - über einen weiteren Teilabschnitt der innenliegenden Kabelführung - mit dem zweiten Verbinderelement verbunden ist.

Nach einer noch weiteren Ausführungsform der erfindungsgemäßen Vorrichtung weist eines der beiden korrespondierenden Verbinderelemente dabei an der dem anderen Verbindungselement zugewandten Stirnseite eine Anzahl von Kontaktpins auf, die zumindest der Anzahl der Einzelleitungen der Kabelführung bzw. des jeweiligen Kabels entspricht. Das andere Verbinderelement weist an seiner Stirnseite eine entsprechend korrespondierende Anzahl an Kontaktabschnitten auf, wobei die Kontaktpins und die Kontaktabschnitte so ausgeführt sind, dass bei Verbindung der Verbinderelemente ein elektrischer/elektronsicher Kontakt zwischen einem jeweiligen Kontaktpin und Kontaktabschnitt hergestellt wird. Beispielsweise können die Kontaktpins als Steckstifte und die Kontaktabschnitte als Buchsen ausgeführt sein. Bevorzugt können die Kontaktpins als Federkontaktstifte ausgebildet sein, sodass die Kontaktabschnitte einfach durch leitende Flächenabschnitte realisiert sein können, die durch Antastung des federunterstützten Kontaktstiftes kontaktiert werden.

Damit die Verbinderelemente immer korrekt in Bezug auf die Anordnung der Kontaktpins/Kontaktabschnitte bzw. der zugeordneten Einzelleitungen verbunden werden, können die beiden Verbinderelemente einen gleichen nichtkreisrunden, bevorzugt nichtrotationssymmetrischen, Querschnitt aufweisen. Die korrekte Verbindungsposition besteht, wenn die Konturen beider Verbinderelemente miteinander fluchten.

Alternativ oder zusätzlich zu einem nichtrotationssymmetrischen Querschnitt der Verbinderelemente können die Verbinderelemente zur eindeutigen Festlegung der korrekten Lage der Kontaktpins und Kontaktabschnitte des jeweiligen Verbinderelements in Bezug zueinander, damit die elektrischen und/oder elektronischen Einzelleitungen korrekt miteinander verbunden werden, nach noch einer Ausführungsform der erfindungsgemäßen Vorrichtung eine magnetische Codierung aufweisen. Dabei weist jedes Verbinderelement an den zugewandten Stirnseiten zumindest zwei Permanentmagnete mit einer vorbestimmten Anordnung von Nord- und Südpol auf, sodass eine Anziehungskraft zwischen Nord- und Südpolen an den jeweiligen Stirnseiten nur bei korrekter Lage der Verbinderelemente zueinander auftritt. Durch die spezifische Anordnung der Permanentmagnete in Bezug auf die Kontaktpins/Kontaktabschnitte an den Stirnseiten der Verbinderelemente sorgt das Aufeinandertreffen gleicher Pole bei falscher Positionierung der Verbinderelement zueinander für eine Abstoßung, die ein unkorrektes Verbinden der Verbinderelemente vermeidet.

Nach einer weiteren alternativen oder zusätzlichen Ausführungsform der erfindungsgemäßen Vorrichtung zur Sicherstellung der korrekten Zusammenfügung der Verbinderelemente können die Verbinderelemente zusätzliche Steuerkontaktpins bzw. Steuerkontaktabschnitte aufweisen, deren Anordnung an der jeweiligen Stirnseite der Verbinderelemente in Bezug auf die den Einzelleitungen zugeordneten Kontaktpins und Kontaktabschnitten vorbestimmt ist, wobei die Steuerkontaktpins bzw. Steuerkontaktabschnitte über zugeordnete Steuerleitungen mit einer Freischalteinrichtung verbunden sind, die beispielsweise eine Widerstandsmessschaltung umfassen kann. Die Freischalteinrichtung ist dazu konfiguriert, die Einzelleitungen erst bei vollständiger und korrekter Verbindung der Verbinderelemente freizuschalten, sodass an die Einzel- bzw. Signalleitungen nur dann Spannung angelegt wird, wenn der korrekte Kontakt der Steuerkontaktpins mit den Steuerkontaktabschnitten - und damit der Kontaktpins und Kontaktabschnitte - festgestellt wurde.

Zur weiteren Absicherung der korrekten Verbindung der Verbinderelemente, die durch die spezifische Anordnung von Steuerkontaktpins/Steuerkontaktabschnitten zusätzlicher Steuerleitungen in Bezug auf die Kontaktpins/Kontaktabschnitte der Signalleitungen bereitgestellt wird, können die zusätzlichen Steuerkontaktpins/-abschnitte in ihrer Form, z. B. Durchmesser, von der Form bzw. dem Durchmesser der Kontaktpins/Kontaktabschnitte der Signalleitungen abweichen. Bevorzugt jedoch kann das erste Verbinderelement an der Stirnseite Formelemente und das zweite Verbinderelement an der Stirnseite Gegenformelemente aufweisen. Das Gegenformelement ist mit einer zum Formelement komplementären Form ausgebildet, die ein passendes Zusammenfügen von Formelement und Gegenformelement gestattet. Die Gegenformelemente sind daher in Abmessungen und Lage an der Stirnseite des zweiten Verbinderelements korrespondierend zu Abmessungen und Lage der Formelemente an der Stirnseite des ersten Verbinderelements ausgebildet.

Dabei kann an einem der Verbinderelemente jedem Steuerkontaktpin ein erstes Formelement und jedem Kontaktpin ein zweites Formelement zugeordnet werden, das sich von dem ersten Formelement unterscheidet. Entsprechend kann an dem anderen Verbinderelement jedem Steuerkontaktabschnitt ein erstes Gegenformelement, das mit dem ersten Formelement korrespondiert, und jedem Kontaktabschnitt ein zweites Gegenformelement zugeordnet werden, das sich von dem ersten Gegenformelement unterscheidet und mit dem zweiten Formelement korrespondiert. Die ersten und zweiten Formelemente (und korrespondierend dazu die ersten und zweiten Gegenformelemente) können sich in ihrer Form und/oder Abmessungen unterscheiden, z. B. ringförmig mit unterschiedlichen Durchmessern um den jeweiligen Kontaktpin bzw. Kontaktabschnitt ausgebildet sein.

Eine weitere Ausführung der zusätzlichen Steuerleitungen als nacheilender Kontakt - etwa indem die Steuerkontaktpins kürzer als die Kontaktpins ausgeführt sind - stellt zudem sicher, dass Spannung erst dann an den Signalleitungen angelegt wird, wenn die Steuerleitungen und damit die Verbinderelemente vollständig und nicht nur korrekt miteinander verbunden sind.

Alternativ zu zusätzlichen Steuerkontaktpins und Steuerkontaktabschnitten kann zumindest eines der beiden Verbinderelemente einen Näherungssensor aufweisen, der über Steuerleitungen mit einer Freischalteinrichtung für die Einzelleitungen verbunden ist. Als Näherungssensor kann beispielsweise eine Hall-Sonde, oder es kann ein anderer magnetischer, induktiver, kapazitiver oder optischer Näherungssensor eingesetzt werden. Damit kann die korrekte und vollständige Verbindung der Verbinderelemente ohne zusätzliche Steuerkontaktpins/Steuerkontaktabschnitte festgestellt werden. Mit diesen Varianten wird sichergestellt, dass an den Signalleitungen erst dann Spannung angelegt wird, wenn die Verbinderelemente korrekt und vollständig verbunden sind und damit die Schnittstelle des Drehmomentscharniers wirksam abgedichtet ist, wodurch der Explosionsschutz weiter verbessert ist.

Nach noch einer Ausführungsform der erfindungsgemäßen Vorrichtung kann das erfindungsgemäße Drehmomentscharnier zumindest an der Schnittstelle zwischen den Bauteilgruppen eine oder mehrere Dichtung(en) aufweisen, die der ersten oder der zweiten Bauteilgruppe zugeordnet ist/sind. Damit erreicht das erfindungsgemäße Drehmomentscharnier zumindest eine Staub- und Wasserdichtigkeit gemäß IP65. IP steht hierbei für den International Protection Code. Ggf. können weitere Dichtungen, z. B. auch gasdichte Abdichtungen zwischen den Buchsenelementen vorgesehen sein, um bei Bedarf auch eine höhere Schutzart, z. B. IP 69 erreichen zu können. Auf diese Weise kann das Drehmomentscharnier einfach gereinigt werden, sodass auch ein Einsatz in Reinräumen ermöglicht wird, insbesondere in Kombination mit einer weiteren Ausbildung des Drehmomentscharniers mit einem geschlossenen Edelstahlgehäuse, das einfach, schnell und effizient mit nahezu allen gängigen Reinigungs- und Desinfektionsmitteln gereinigt werden kann. Eine gasdichte Abdichtung sorgt dabei für einen verbesserten Explosionsschutz, indem vermieden wird, dass Alkoholdämpfe der Desinfektionsmittel an die elektrische Kontaktstelle gelangen können. Die Abdichtung der Schnittstelle erfolgt somit in Abhängigkeit der für die angestrebte Schutzart erforderlichen Dichtigkeit. Gestaltung der Abdichtung und Dichtmaterialien werden entsprechend aus den aus dem Stand der Technik bekannten Dichtlösungen gewählt, um die Anforderungen an Staub-, Wasser- und /oder Gasdichtigkeit und hinsichtlich der Resistenz gegenüber Reinigungs- und Desinfektionsmitteln zu erfüllen.

In einer weiteren Ausführungsform eines erfindungsgemäßen Drehmomentscharniers kann die Schnittstelle zwischen dem Hohlachsenelement und dem ersten Buchsenelement vorgesehen sein, wobei die drehfeste Verbindung des Hohlachsenelements mit dem ersten Buchsenelement lösbar ausgebildet ist. Die erste Bauteilgruppe weist dabei zumindest das erste Buchsenelement und das erste Verbinderelement auf, und die zweite Bauteilgruppe weist zumindest das zweite Buchsenelement, das Hohlachsenelement und das Reibelement und das Anschlusselement auf.

Selbstverständlich können die Bauteilgruppen noch weitere Bauteile aufweisen, die zur Bildung des Drehmomentscharniers und zum Anschluss der Gegenstände erforderlich bzw. üblich oder vorteilhaft sind. Dazu gehören zum Beispiel die Anschlussvorrichtung zum Anschluss des ersten Gegenstands, die der ersten Bauteilgruppe zuzuordnen ist, und das Anschlusselement zum Anschließen des zweiten Gegenstands, das der zweiten Bauteilgruppe zuzuordnen ist. Die Zuordnung weiterer, nicht genannter Bauteile des Drehmomentscharniers ergibt sich aus deren Lage im Drehmomentscharnier in Bezug auf die definierte Schnittstelle. Lediglich die optional an der Schnittstelle vorgesehene Dichtung kann wahlweise der ersten oder der zweiten Bauteilgruppe zugeordnet werden. Die Zuordnung einer solchen Dichtung kann dabei von der Einbaukonstellation abhängig sein, beispielsweise je nach dem, an welchem Bauteil die zur Aufnahme der Dichtung vorgesehene Ausnehmung ausgebildet ist. In der Ausführungsform mit der Schnittstelle zwischen dem Hohlachsenelement und dem ersten Buchsenelement kann eine zur Aufnahme einer Dichtung vorgesehene Nut folglich entweder an dem Hohlachsenelement oder (vorzugsweise) an dem ersten Buchsenelement vorgesehen sein, sodass die Dichtung entsprechend der ersten Bauteilgruppe zugeordnet werden kann, wenn die Nut an dem ersten Buchsenelement vorliegt, und der zweiten Bauteilgruppe, wenn die Nut an dem Hohlachsenelement vorliegt. Das Vorhandensein einer Aufnahmeausnehmung ist dabei nicht zwingend. Es sind auch Dichtlösungen denkbar, die keine Aufnahmeausnehmungen erfordern. Grundsätzlich ist allerdings eine Zuordnung der Schnittstellendichtung zu einer der Bauteilgruppen nicht entscheidend, denn der Fachmann versteht, dass diese Dichtung quasi die Schnittstelle definiert, da sie an der Schnittstelle der verbundenen Bauteilgruppen für die Abdichtung sorgt.

Nach noch einer weiteren Ausführungsform des erfindungsgemäßen Drehmomentscharniers mit der Schnittstelle zwischen dem Hohlachsenelement und dem ersten Buchsenelement ist vorgesehen, dass die lösbare drehfeste Verbindung des Hohlachsenelements mit dem ersten Buchsenelement, das eine Aufnahme für den ersten Abschnitt des Hohlachsenelements aufweist, durch eine formschlüssige und/oder kraftschlüssige und/oder magnetische Verbindungstechnik bereitgestellt wird.

Für eine lösbare formschlüssige Welle-Nabe-Verbindung kann der erste Abschnitt des Hohlachsenelements einen nichtkreisrunden Querschnitt haben und die Aufnahme für den ersten Abschnitt des Hohlachsenelements im ersten Buchsenelement einen entsprechend geformten nichtkreisrunden Querschnitt aufweisen. Besonders bevorzugt kann der nichtkreisrunde Querschnitt auch nichtrotationssymmetrisch sein, um eine korrekte Verbindungsposition der beiden Bauteilgruppen beim Überführen in die Gebrauchsposition des Drehmomentscharniers sicherzustellen. Beispielsweise kann der Querschnitt rund mit einer einseitigen Abflachung oder Ausbuchtung oder als ein unregelmäßiges Vieleck geformt sein.

Alternativ oder zusätzlich können der erste Abschnitt des Hohlachsenelements und das erste Buchsenelement miteinander fluchtende Bohrungen mit oder ohne Gewinde aufweisen, in denen ein Bolzen entsprechend mit oder ohne Gewinde angeordnet ist, wobei Schraubenverbindungen sowohl form- als auch kraftschlüssig sind.

Eine weitere alternative oder zusätzliche lösbare form- und kraftschlüssige Verbindungstechnik kann vorsehen, dass der erste Abschnitt des Hohlachsenelements eine Rastausnehmung wie eine Kerbe oder eine Nut zum Eingriff eines federgelagerten Bolzens (z. B. Federstift) aufweist, der in einer mit der Rastausnehmung korrespondierenden Position in der für den ersten Abschnitt ausgebildeten Aufnahme des ersten Buchsenelements gelagert ist.

Alternativ oder zusätzlich zu den form- und/oder kraftschlüssigen Verbindungstechniken kann eine magnetische Verbindungstechnik zur lösbaren Verbindung des Hohlachsenelements mit dem ersten Buchsenelement vorgesehen sein, wobei ein erstes Magnetelement an einer dem ersten Abschnitt benachbarten Fläche des Anschlags (senkrecht zur Längsachse) und ein zweites Magnetelement an einer dazu korrespondierenden Fläche an dem ersten Buchsenelement benachbart zu der Aufnahme angeordnet ist. Das erste und das zweite Magnetelement sind derart aus magnetischen und magnetisierbaren Materialien ausgewählt und angeordnet, dass eine Anziehungskraft zwischen dem ersten und dem zweiten Magnetelement bereitgestellt wird. D. h., in die Flächen können Magnete derart eingelassen sein, dass ein Nordpol eines ersten Magnetelements einem Südpol des zweiten Magnetelements gegenüber liegt. Alternativ ist es auch möglich, dass nur ein Magnetelement vorliegt, das durch einen eingelassenen Magneten oder einen magnetischen Werkstoff gebildet wird, während das zweite Magnetelement durch einen magnetisierbaren Einsatz oder Werkstoff bereitgestellt wird, sodass die Orientierung des als erstes Magnetelements eingelassenen Magneten oder magnetischen Werkstoffs keine Rolle spielt.

In einer weiteren Ausführungsform des erfindungsgemäßen Drehmomentscharniers mit der Schnittstelle zwischen dem Hohlachsenelement und dem ersten Buchsenelement kann zur Anordnung des zweiten - der zweiten Bauteilgruppe mit dem Hohlachsenelement zugeordneten - Verbinderelements eine Aufnahmeausnehmung an einer Stirnfläche des ersten Abschnitts des Hohlachsenelements ausgebildet sein. Diese Aufnahmeausnehmung wird durch einen Abschnitt der längsaxialen Durchtrittöffnung des Hohlachsenelements an der Stirnfläche gebildet und korrespondiert in Form und Abmessung mit dem zweiten Verbinderelement, sodass dieses formschlüssig in der Aufnahmeausnehmung aufgenommen und mit der sich durch die längsaxiale Durchtrittöffnung erstreckenden Kabelführung verbunden werden kann.

Das erste Buchsenelement weist entsprechend eine Aufnahme(ausnehmung) für das erste Verbinderelement auf, die in Form und Abmessung mit dem ersten Verbinderelement korrespondiert und gegenüberliegend zu der Aufnahmeausnehmung des zweiten Verbinderelements, die an der Stirnfläche des ersten Abschnitts des Hohlachsenelements vorliegt, in der für den ersten Abschnitt des Hohlachsenelements ausgebildeten Aufnahme des ersten Buchsenelements positioniert ist.

Um die Verbinderelemente drehfest in der Aufnahmeausnehmung anzuordnen, können das erste und das zweite Verbinderelement in einer weiteren Ausführungsform des erfindungsgemäßen Drehmomentscharniers einen nichtkreisrunden, gegebenenfalls auch nichtrotationsymmetrischen Querschnitt haben, wobei die Aufnahmeausnehmung im Hohlachsenelement für das zweite Verbinderelement und die Aufnahme im ersten Buchsenelement für das erste Verbinderelement einen entsprechend geformten nichtkreisrunden bzw. nichtrotationssymmetrischen Querschnitt aufweisen. Ein nichtrotationssymmetrischer Querschnitt der Verbinderelemente kann, wie oben ausgeführt, insbesondere dann für den korrekten Anschluss sorgen, wenn die lösbare Verbindung des Hohlachsenelements mit dem ersten Buchsenelement nicht auf einem Formschluss des ersten Abschnitts und der Aufnahme mit einem nichtrotationssymmetrischen Querschnitt basiert, der bereits für eine korrekte Verbindungsposition sorgen würde.

Gemäß einer Ausführungsform, die eine Alternative zu der mit der Schnittstelle zwischen dem Hohlachsenelement und dem ersten Buchsenelement vorliegenden Ausführungsform des erfindungsgemäßen Drehmomentscharniers bildet, liegt die Schnittstelle zwischen dem ersten Buchsenelement und der Anschlussvorrichtung vor, die zum Anschluss des ersten Gegenstands an das erste Buchsenelement vorgesehen ist. Diese Anschlussvorrichtung ist in dieser Ausführungsform als Adapter ausgebildet, der lösbar in dem ersten Buchsenelement in einer Adapterausnehmung angeordnet ist, die in Form und Abmessung mit der Anschlussvorrichtung korrespondiert und in einer zur Anlage an dem ersten Gegenstand vorgesehenen Anbindungsfläche des ersten Buchsenelements ausgebildet sein kann. In dieser Ausführungsform weist die erste Bauteilgruppe die Anschlussvorrichtung und das erste Verbinderelement auf, das in einer Anschlussbuchse der Anschlussvorrichtung aufgenommen ist. Die zweite Bauteilgruppe dieser Ausführungsform weist entsprechend zumindest das zweite Buchsenelement, das Hohlachsenelement, das Reibelement sowie das erste Buchsenelement und das zweite Verbinderelement auf, das in einer in dem ersten Buchsenelement ausgebildeten Aufnahme angeordnet ist, die in Form und Abmessung mit dem zweiten Verbinderelement korrespondiert und an der Adapterausnehmung gegenüberliegend zu der Anschlussbuchse der Anschlussvorrichtung positioniert ist.

Selbstverständlich kann insbesondere die zweite Bauteilgruppe noch weitere Bauteile aufweisen, die zur Bildung des Drehmomentscharniers und zum Anschluss erforderlich bzw. üblich oder vorteilhaft sind, wie etwa das Anschlusselement zum Anschließen des zweiten Gegenstands. Auch hier kann die optional an der Schnittstelle vorgesehene Dichtung wahlweise der ersten oder der zweiten Bauteilgruppe, ggf. abhängig von der Lage einer die Dichtung aufnehmenden Nut an der Anschlussvorrichtung oder der Adapterausnehmung, zugeordnet sein.

Eine nichtkreisrunde Form der Adapter-Anschlussvorrichtung und deren Ausrichtung in Bezug auf den in der Gebrauchsanordnung verbundenen Gegenstand ist für eine korrekte Verbindungsposition der beiden Bauteilgruppen ausreichend, insbesondere dann, wenn die Anbindungsfläche nicht eben ist.

Ferner betrifft die Erfindung eine Vorrichtung, die aus zwei Gegenständen und zumindest einem Drehmomentscharnier besteht, über das die Gegenstände schwenkbar verbunden sind. Dabei sorgt eine innenliegende, durch das Drehmomentscharnier geführte Kabelführung für eine elektrische und/oder elektronische Verbindung der Gegenstände. Dabei ist das Drehmomentscharnier ein erfindungsgemäßes Drehmomentscharnier nach einer der obigen Ausführungsformen, das ein reversibles Trennen und Verbinden der Gegenstände ermöglicht.

Eine erfindungsgemäße Verwendung eines erfindungsgemäßen Drehmomentscharniers mit innenliegender Kabelführung stellt eine schwenkbare sowie elektrische und/oder elektronische Verbindung zweier Gegenstände bereit, wobei reversibles Trennen und Verbinden der Gegenstände an einer Schnittstelle durch das in Bauteilgruppen aufgeteilte Drehmomentscharnier ermöglicht wird, indem eine erste Bauteilgruppe dem ersten Gegenstand und eine zweite Bauteilgruppe dem zweiten Gegenstand zugeordnet werden. Die Bauteilgruppen werden dabei mit dem jeweiligen Gegenstand mechanisch verbunden und stellen einen elektrischen/elektronischen Anschluss des jeweiligen Gegenstands an die innenliegende Kabelführung bereit. Das reversible Trennen und Verbinden der Bauteilgruppen umfasst das reversible Trennen und Verbinden zumindest eines elektrischen und/oder elektronischen Verbinderelementepaars der innenliegenden Kabelführung an der Schnittstelle, das aus einem ersten, der ersten Bauteilgruppe zugeordneten Verbinderelement und einem damit korrespondierenden/dazu komplementären zweiten, der zweiten Bauteilgruppe zugeordneten Verbinderelement besteht.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich schematische Darstellungen von Ausführungsformen der Erfindung.

Dabei zeigen:
- **Fig. 1**: perspektivische Ansichten zweier mit einem erfindungsgemäßen Drehmomentscharnier a) in Gebrauchsanordnung schwenkbar verbundener Gegenstände und b) durch Trennung der Bauteilgruppen getrennter Gegenstände,
- **Fig. 2**: perspektivische Ansichten eines alternativ ausgeführten erfindungsgemäßen Drehmomentscharniers a) in Gebrauchsanordnung mit einem verbundenen Gegenstand und b) in Bauteilgruppen getrennt,
- **Fig. 3**: eine schematische Darstellung einer erfindungsgemäßen Vorrichtung aus zwei mit einem erfindungsgemäßen Drehmomentscharnier verbundenen Gegenständen in Gebrauchsanordnung und getrennter Anordnung,
- **Fig. 4**: eine perspektivische Explosionsdarstellung eines Drehmomentscharniers gemäß einer erfindungsgemäßen Ausführungsform,
- **Fig. 5**: eine schematische Seitenansicht eines Drehmomentscharniers entsprechend Fig. 3,
- **Fig. 6**: eine schematische Seitenansicht des Hohlachsenelements mit einem ersten Buchsenelement eines Drehmomentscharniers entsprechend Fig. 3 mit unterschiedlichen Verbindungs- und Abdichtungslösungen,
- **Fig. 7**: schematische Detailschnittansichten zur lösbaren Verbindung des Hohlachsenelements mit dem ersten Buchsenelement durch a) einen in eine Nut eingreifenden Federstift und b) eine Magnetverbindung,
- **Fig. 8**: eine perspektivische Explosionsdarstellung eines Drehmomentscharniers gemäß einer alternativen erfindungsgemäßen Ausführungsform,
- **Fig. 9**: eine schematische Seiten- und Teilschnittansicht eines Drehmomentscharniers entsprechend Fig. 7,
- **Fig. 10**: eine schematische Detailschnittansicht der Anordnung des Hohlachsenelements aus Fig. 7, 8,
- **Fig. 11**: eine schematische Frontansicht auf die Schnittstelle eines Drehmomentscharniers entsprechend Fig. 7, 8 mit einer alternativen Schnittstellenabdichtung,
- **Fig. 12**: eine schematische Darstellung einer Magentcodierung der Verbinderelemenete in a) Draufsicht auf die Stirnseiten und b) Seitenansicht,
- **Fig. 13**: eine schematische Darstellung der Anordnung von Steuer- und Signalkontaktpins bzw. Abschnitte eines Verbinderelementepaars,
- **Fig. 14**: schematische Drauf- und Seitenansicht eines einachsig schwenkbaren Drehmomentscharniers und
- **Fig. 15**: schematische Drauf- und Seitenansicht eines um zwei Achsen schwenkbaren Drehmomentscharniers.

Die Erfindung betrifft ein Drehmomentscharnier mit innenliegender Kabelführung, das einfach anschließ- bzw. verbindbar und trennbar und dadurch besonders wartungsfreundlich ist, beispielsweise zum Austauschen der angelenkten Gegenstände. Ein weiterer Aspekt der Erfindung betrifft eine Vorrichtung, die aus zwei mit einem solchen Drehmomentscharnier verbundenen Gegenständen besteht, und die Verwendung des Drehmomentscharniers zum lösbaren Verbinden der Gegenstände.

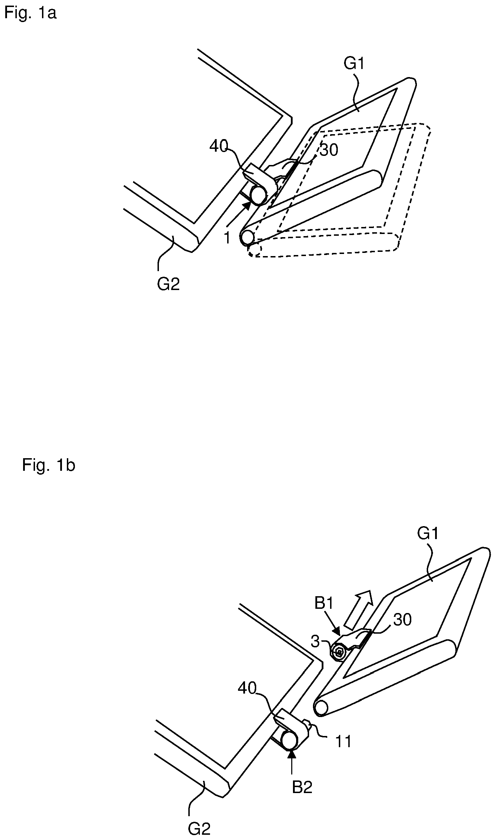

Wie in **Figuren 1****,** **2****,** **3** **und** **8** beispielhaft gezeigt, können die durch ein erfindungsgemä-ßes Drehmomentscharnier 1 verbundenen Gegenstände G1, G2 elektronische Geräte wie Tablet oder Tastatur G1 und Monitor G2 sein. Die Erfindung ist allerdings nicht auf diese beispielhaft genannten Gegenstände beschränkt - ein erfindungsgemäßes Drehmomentscharnier 1 kann zur Verbindung jeglicher Gegenstände eingesetzt werden, die einstellbar verschwenkbar sein sollen und eine elektrische und/oder elektronische Verbindung erfordern. Dabei kann etwa auch eine Halterung bzw. ein Tragarm, der eine elektrische und/ oder elektronische Leitung aufweist, einen Gegenstand darstellen, der über ein erfindungsgemäßes Drehmomentscharnier 1 schwenkbar und elektrisch/elektronisch mit einem elektronischen Gerät wie einer Tastatur oder einem Tablet verbunden werden kann, sodass das elektronische Gerät auf den jeweiligen Anwender ergonomisch eingestellt werden kann. Ferner wird auch eine Anordnung aus einem Tragarm, der eine elektrische Leitung aufweist, (erster Gegenstand) und einem elektrischen Gerät wie beispielsweise einer Lampe (zweiter Gegenstand) als erfindungsgemäße Vorrichtung angesehen, wenn die Lampe über ein erfindungsgemäßes Drehmomentscharnier schwenkbar und elektrisch mit dem Tragarm bzw. mit der Leitung verbunden ist.

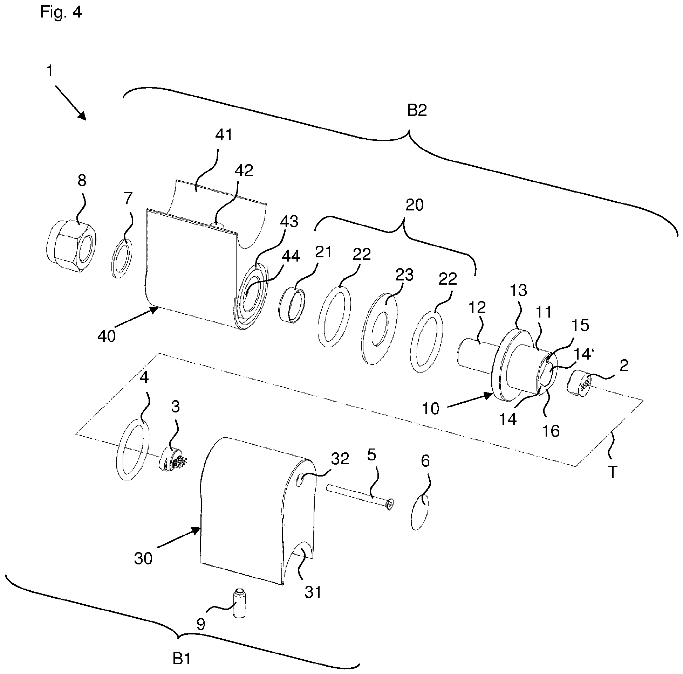

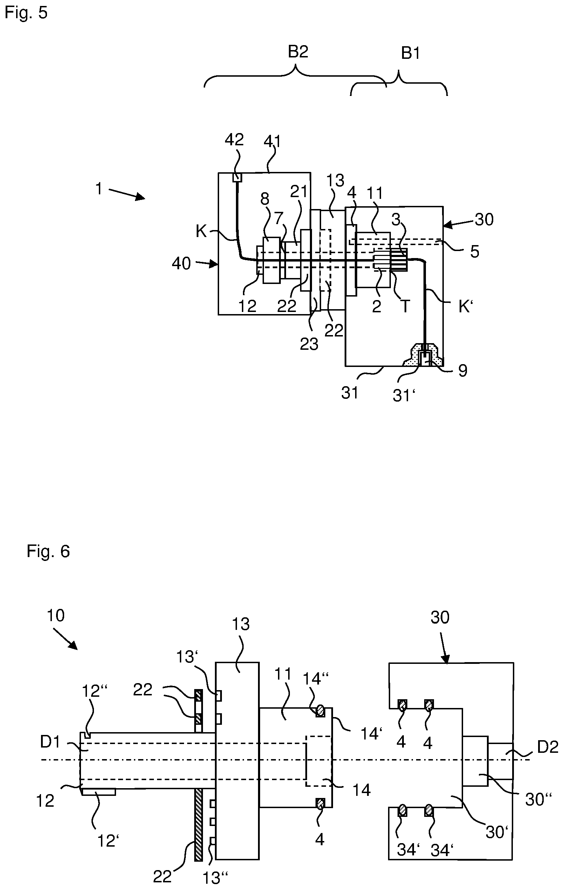

Die gezeigten Drehmomentscharniere 1 weisen zwei oder drei Buchsenelemente 30, 40 zur Anbindung an die schwenkbar und elektrisch/elektronisch zu verbindenden Gegenständen G1, G2 auf. Die Buchsenelemente 30, 40 sind über ein Hohlachsenelement 10, das die Kabeldurchführung gestattet (vgl. **Fig. 4** bis **10**), schwenkbar miteinander verbunden. In den mit **Fig. 4** bis **7** gezeigten Vorrichtungen ist das Hohlachsenelement 10 an einem ersten Abschnitt 11 mit einem der Buchsenelemente 30 drehfest verbunden, wobei an einem zweiten Abschnitt 12 des Hohlachsenelements 10, der sich drehbar in das zweite Buchsenelement 40 erstreckt, ein Reibelement 20 im Bereich zwischen den Buchsenelementen 30, 40 angeordnet ist. Das Reibelement 20 sorgt für eine mechanische Selbstarretierung und stufenlose Einstellbarkeit in einer gewünschten Winkelposition der Gegenstände G1, G2. Das Reibelement 20 in der in **Fig. 4** und **5** gezeigten Vorrichtung weist eine Anordnung aus einem Reibring 21 und einer zwischen zwei Dichtungen 22 angeordneten Scheibe 23 auf. Der Reibring 21 ist dabei in der Aufnahmeöffnung 44 des zweiten Buchsenelements 40 verankert und auf dem zweiten Abschnitt 12 des Hohlachsenelements 10 so angeordnet, dass bei Drehung ein Reibmoment zwischen der Innenfläche des Reibrings 21 und der Außenfläche des Hohlachsenelements 10 erzeugt wird. Die Anordnung der Scheibe 23 verbessert die Abdichtung zwischen den Buchsenelementen 30, 40 durch Anordnung der zwei Dichtungen 22, von denen eine an dem zweiten Buchsenelement 40 in einer ringförmigen Nut 43 und die andere an dem scheibenförmigen Anschlag 13 des Hohlachsenelements 10 zwischen den Abschnitten 11 und 12 angeordnet sind.

Ein erfindungsgemäßes Drehmomentscharnier kann auch ein anderes, hierin figurativ nicht gezeigtes, Reibelement aufweisen, das ein aus dem Stand der Technik bekanntes Reibelement sein kann.

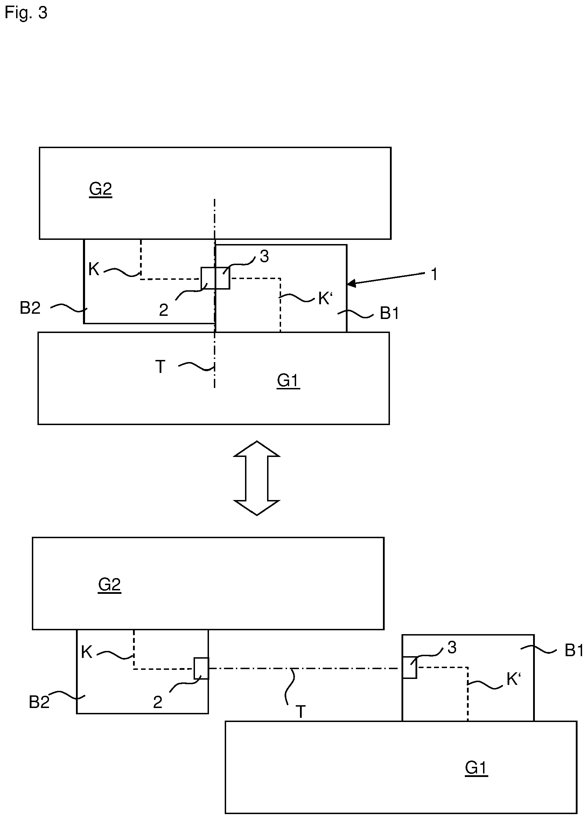

Um die einfache Verbindung und Trennung des Drehmomentscharniers 1 mit innenliegender Kabelführung zu ermöglichen, besteht das erfindungsgemäße Drehmomentscharnier 1, wie in **Fig. 3** schematisch skizziert ist, aus zwei an einer Schnittstelle T reversibel trennbaren und verbindbaren Bauteilgruppen B1, B2, die den Gegenständen G1, G2 zugeordnet werden, wobei jede Bauteilgruppe B1, B2 an der Schnittstelle T jeweils zumindest ein elektrisches/elektronisches Verbinderelement 2, 3 aufweist. Die beiden Verbinderelemente 2, 3 sind komplementär ausgeführt, um in der in **Fig. 3** oben dargestellten Gebrauchsanordnung, wenn die beiden Bauteilgruppen B1, B2 zusammengefügt sind, eine lösbare Verbindung zu bilden, die den elektrischen/elektronischen Kontakt der Kabelführungsabschnitte K, K' zur Bereitstellung der innenliegenden Kabelführung herstellt. Die Verbinderelemente 2, 3 können, wie beispielsweise in **Fig. 4** zu sehen ist, durch ihre Formgebung passend ausgerichtet und lösbar befestigt werden. Zur passenden Ausrichtung weisen die Verbinderelemente 2, 3 einen von der Kreisform abweichenden Querschnitt auf, der hier auf einer Kreisform basiert, die eine einseitige Ausbuchtung aufweist.

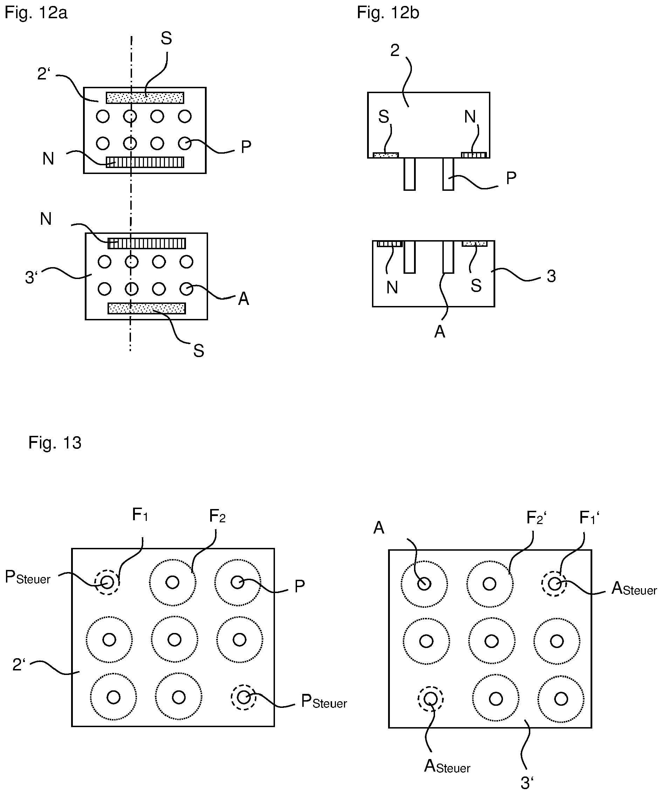

Alternativ (oder zusätzlich) zu einer speziellen Formgebung der Verbinderelemente 2, 3 kann die korrekte Lage der Verbinderelemente 2, 3 beim Zusammenfügen des Drehmomentscharniers 1 durch Ausführungen der Verbinderelemente 2, 3 mit einer magnetischen Codierung oder spezifischen Anordnung zusätzliche Steuerkontakte sichergestellt werden, die jeweils in **Fig. 12** und **13** skizziert sind.

Nicht in den Figuren dargestellt ist, dass die Kabelführung K, K' üblicherweise mehrere Einzelleitungen umfasst, die zur elektrischen und/oder elektronischen Verbindung der Gegenstände dienen und nachfolgend auch als Signalleitungen bezeichnet werden. Die Verbinderelemente 2, 3 weisen für jede Einzelleitung an der jeweiligen Stirnseite 2', 3' jeweils einen Kontaktpin P bzw. Kontaktabschnitten A auf, sodass beim Zusammenfügen der Verbinderelemente 2, 3 jeweils ein Kontakt zwischen einem Kontaktpin P und dem einem Kontaktabschnitt A hergestellt wird.

Um bei einer spiegelsymmetrischen Anordnung der Kontaktpins P und Kontaktabschnitte A, wie in **Fig. 12a** gezeigt, falsches Zusammenfügen der Verbinderelemente 2, 3 zu vermeiden, zeigen die dargestellten Verbinderelemente 2, 3 jeweils zwei Permanentmagnete S, N. Dabei ist jeweils ein Permanentmagnet S mit dem Südpol und ein Permanentmagnet N mit dem Nordpol in einer Weise an der jeweiligen Stirnseite 2', 3' angeordnet, dass beim korrekten Zusammenfügen der Verbinderelemente 2, 3 die Nordpole und Südpole der Permanentmagnete S, N aufeinandertreffen. Damit gestattet die Anordnung der Permanentmagnete S, N die Verbindung der beiden Verbinderelemente 2, 3 nur in der korrekten Lage in **Fig. 12b**, in der eine Anziehung zwischen den jeweils gegenpolig angeordneten Permanentmagneten S, N besteht. Darüber hinaus sichert die Magnetanziehung die Verbindung der Verbinderelemente 2, 3. Treffen bei unkorrekter Lage der Verbinderelemente 2, 3 gleiche Pole aufeinander, sorgt die Abstoßung dafür, dass eine Verbindung der Verbinderelemente 2, 3 nicht gelingt.

Grundsätzlich können die Kontaktpins P als Steckstifte und die Kontaktabschnitte A als Buchsen ausgeführt sein. Vorteilhaft können die Kontaktpins P als Federkontaktstifte ausgebildet sein, sodass die Kontaktabschnitte A durch leitende Flächenabschnitte realisiert sein können, die durch Antastung des federunterstützten Kontaktstiftes kontaktiert werden.

**Fig. 13** verdeutlicht eine Ausführungsform der Verbinderelemente 2, 3 mit zusätzlichen Steuerkontaktpins P_{Steuer} und Steuerkontaktabschnitten A_{Steuer}, deren Anordnung in Bezug auf die Kontaktpins P bzw. Kontaktabschnitte A die korrekte Verbindungsposition festlegt. Die Steuerkontaktpins P_{Steuer} und Steuerkontaktabschnitte A_{Steuer} sind über Steuerleitungen mit einer Freischalteinrichtung verbunden (nicht dargestellt), die eine Widerstandsmessung umfassen kann. Von den jeweils sieben Kontaktpins P und Kontaktabschnitten A ist der Übersichtlichkeit wegen nur einer indiziert. Bei korrektem Zusammenfügen der Verbinderelemente 2, 3 kontaktieren die Kontaktpins P die Kontaktabschnitte A und die Steuerpins P_{Steuer} die Steuerkontaktabschnitte A_{Steuer}. Durch den Kontakt der Steuerpins P_{Steuer} mit den Steuerkontaktabschnitten A_{Steuer} werden durch die Freischalteinrichtung die Einzel- bzw. Signalleitungen zu den Kontaktpins P bzw. Kontaktabschnitten A freigeschaltet, sodass nur bei korrekter Verbindung der Verbinderelemente 2, 3 Spannung an den Kontakten angelegt wird.

Um das korrekte Zusammenfügen der Verbinderelemente 2, 3 weiter zu erleichtern, können zudem an den zur Anlage aneinander vorgesehenen Stirnseiten 2', 3' der Verbinderelemente 2, 3 Formelemente F₁, F₂ und damit korrespondierende bzw. komplementäre Gegenformelemente F₁', F₂' vorgesehen sein. In **Fig. 13** sind den Steuerkontaktpins P_{Steuer} ringförmige Formelemente F₁ mit kleinerem Durchmesser (gestrichelt) und den Kontaktpins P ringförmige Formelemente F₂ mit größerem Durchmesser (gepunktet) zugeordnet und entsprechend den Steuerkontaktabschnitten A_{Steuer} ringförmige Gegenformelemente F₁' mit kleinerem Durchmesser (gestrichelt) und den Kontaktabschnitten A ringförmige Gegenformelemente F₂' mit größerem Durchmesser (gepunktet).

Selbstverständlich sind auch von den gezeigten Ausführungsformen abweichende Ausführungen von Form- und Gegenformelementen denkbar, ebenso wie eine optionale Ausführung der Steuerkontaktpins und Steuerkontaktabschnitte in einer Form (bzw. Gegenform), die von einer Form der Kontaktpins und Gegenform der Kontaktabschnitte abweichen.

Dabei können die Steuerkontaktpins P_{Steuer} und Steuerkontaktabschnitte A_{Steuer} in Bezug auf die Kontaktpins P und Kontaktabschnitte A als nacheilender Kontakt ausgebildet sein, um einen Funkenschlag beim Zusammenführen zu vermeiden, indem die Freischaltung der Einzelleitungen erst erfolgt, wenn die Verbinderelemente 2, 3 vollständig miteinander verbunden sind.

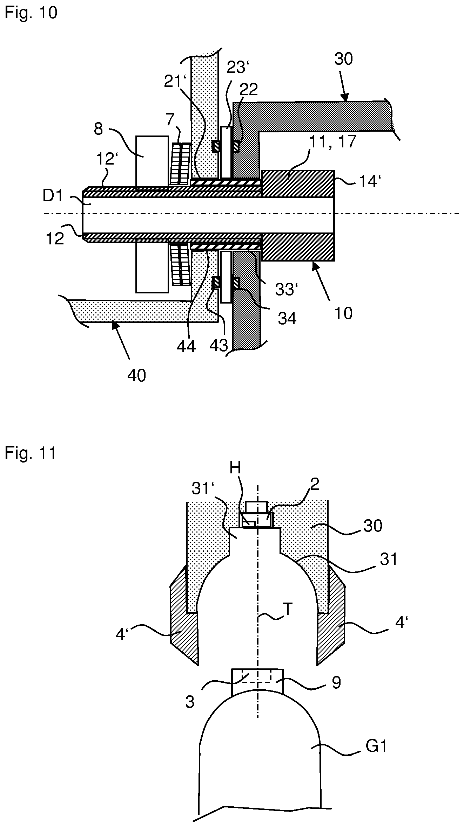

Ein weiteres Beispiel zur Sicherstellung der vollständigen Kontaktierung der Verbinderelemente 2, 3, bevor Spannung an die Einzelleitungen gelegt wird, um Funkenschlag zu verhindern, umfasst einen Näherungssensor H, der über Steuerleitungen mit einer Freischalteinrichtung für die Einzelleitungen verbunden ist (nicht dargestellt und an einem der Verbinderelemente 2, 3 angeordnet ist. In Beispiel von **Fig. 11** ist ein Näherungssensor H am Verbinderelement 2 zu sehen, das in dem Buchsenelement 30 aufgenommen ist. Der Näherungssensor H stellt die Annäherung des Verbinderelements 3 fest, das in diesem Beispiel in einer Anschlussvorrichtung 9 aufgenommen ist, sodass erst bei erfolgter Kontaktierung die Einzelleitungen freigeschaltet werden. Selbstverständlich kann ein Näherungssensor alternativ auch in Verbinderelement 3 angeordnet sein.

Wie **in** **Fig. 1** beispielhaft gezeigt ist, stellt ein erfindungsgemäßes Drehmomentscharnier 1, das mit einer innenliegenden Kabelführung die elektrischen und/oder elektronischen Verbindung der Gegenstände G1, G2 - hier Tastatur G1 und Monitor G2 - bereit, in einer Gebrauchsanordnung (**Fig. 1a**) die schwenkbare Verbindung bereit, und gestattet durch die Untergliederung in reversibel trenn- und verbindbare Bauteilgruppen B1, B2 die Trennung (**Fig. 1b**) der Gegenstände G1, G2 an einer vorbestimmten Schnittstelle, die hier zwischen den beiden Buchsenelementen 30, 40 bzw. zwischen dem ersten Buchsenelement 30 und dem Hohlachsenelement 10 liegt, wobei das Hohlachsenelement 10, von dem der erste Abschnitt 11 zu sehen ist, der Bauteilgruppe B2 mit dem zweiten Buchsenelement 40 zugeordnet ist. Die elektrische/elektronische Verbindung wird dabei ebenfalls getrennt, wobei von der Verbinderpaarung an der Schnittstelle in **Fig. 1b** nur das Verbinderelement 3 zu sehen ist, das der Bauteilgruppe B1 mit dem ersten Buchsenelement 30 zugeordnet ist.

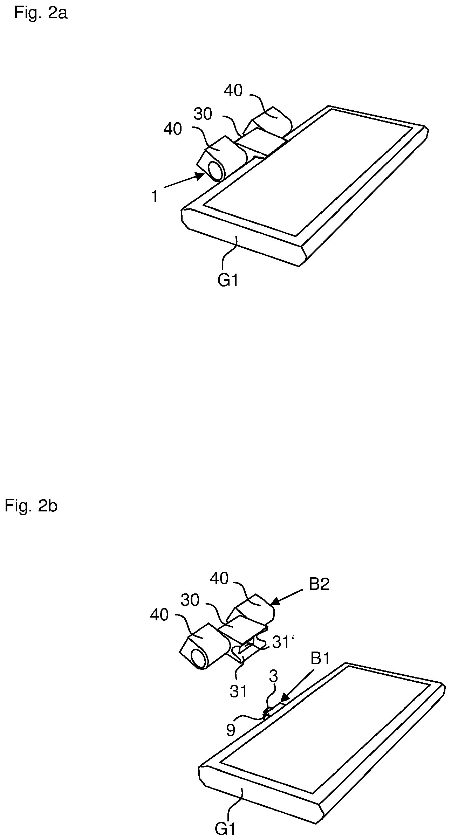

In **Fig. 2** ist eine alternative Ausführungsform eines erfindungsgemäßen Drehmomentscharniers 1 gezeigt, wobei aus Übersichtlichkeitsgründen nur ein verbundener Gegenstand G1 dargestellt ist. Das Drehmomentscharnier 1 ist hier mit einem ersten Buchsenelement 30 und zwei zweiten Buchsenelementen 40 ausgeführt, die jeweils über ein Achsenelement mit dem ersten Buchsenelement 30 schwenkbar verbunden sind, wobei zumindest ein Achsenelement als ein Hohlachsenelement 10 ausgebildet ist, durch dessen längsaxiale Durchtrittöffnung sich die innenliegende Kabelführung zum elektrischen/elektronischen Anschluss der Gegenstände erstreckt. Anders als bei dem in **Fig. 1** gezeigten Beispiel liegt die Schnittstelle des Drehmomentscharniers 1 aus **Fig. 2** nicht zwischen den Buchsenelementen 30, 40, die hier mit dem nicht zu sehenden Hohlachsenelement in der zweiten Bauteilgruppe B2 zusammengefasst sind. Die erste Bauteilgruppe B1 weist hier eine als Adapter ausgebildeten Anschlussvorrichtung 9, die zum elektrischen und/oder elektronischen Anschluss an den ersten Gegenstand G1 ausgebildet ist, und das erste Verbinderelement 3 auf, das mit der Anschlussvorrichtung 9 verbunden ist.

Aus **Fig. 4** **und** **5** wird der Aufbau eines erfindungsgemäßen Drehmomentscharniers 1, auf das sich auch **Fig. 1** bezieht, mit einer Schnittstelle T zwischen dem Hohlachsenelement 10 und dem ersten Buchsenelement 30 deutlich. Die erste Bauteilgruppe B1 weist dabei das erste Buchsenelement 30, das mit einer Anbindungsfläche 31 zur Anbindung an einen nicht dargestellten Gegenstand ausgebildet ist, eine Anschlussvorrichtung 9, die hier als Rundstecker ausgebildet ist, und das erste Verbinderelement 3 auf, das über einen entsprechenden Abschnitt K` der innenliegenden Kabelführung K, K' mit der Anschlussvorrichtung 9 in Verbindung steht. Auch die Dichtung 4, die in der Gebrauchsanordnung des Drehmomentscharniers 1 zwischen dem Hohlachsenelement 10 bzw. dem dort ausgebildeten Anschlag 13 und dem ersten Buchsenelement 30 abdichtet, gehört zu der ersten Bauteilgruppe B1.

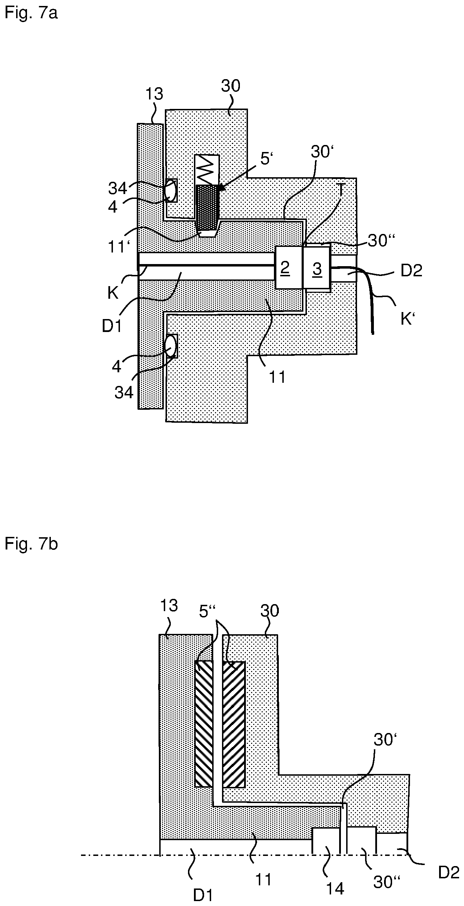

Das erste Buchsenelement 30 weist zur Aufnahme des ersten Abschnitts 11 des Hohlachsenelements 10, des ersten Verbinderelements 3 und der Anschlussvorrichtung 9 sowie der Dichtung 4 entsprechende Aufnahmeausnehmungen 30', 30", 31 ', 34 auf, wie auch die schematische Darstellung in **Fig. 7a** zeigt. Die Aufnahme 30' für den ersten Abschnitt 11 des Hohlachsenelements 10 ist in Form und Abmessung an den ersten Abschnitt 11 angepasst, der im dargestellten Beispiel von **Fig. 4** einen von der Kreisform abweichenden Querschnitt mit einer Abflachung 16 aufweist. Durch diesen nichtrotationssymmetrischen Querschnitt können die beiden Bauteilgruppen B1, B2 nur in einer Weise verbunden werden, die aus sich heraus die korrekte Anschlussposition der Verbinderelemente 2 und 3 der beiden Bauteilgruppen B1, B2 bereitstellt. Für Abdichtung zwischen dem Hohlachsenelement 10 und dem ersten Buchsenelement 30 sorgt die Dichtung 4, die in einer Ringnut 34, siehe auch **Fig. 7a**, angeordnet wird, die in dem ersten Buchsenelement 30 um die Aufnahme 30' - entsprechend der Ringnut 43 um Aufnahmeöffnung 44 im zweiten Buchsenelement 40 in **Fig. 4** - ausgebildet ist.

An die Aufnahme 30' schließt sich eine Ausnehmung 30" für das erste Verbinderelement 3 an, das derart in der Ausnehmung 30" aufgenommen ist, dass das Verbinderelement 3 in der Ausnehmung 30" verbleibt, wenn es von dem zweiten Verbinderelement 2 bei Trennung der Bauteilgruppen B1, B2 getrennt wird. Dazu kann die Ausnehmung 30" in Form und Abmessung an das erste Verbinderelement 3 angepasst ausgebildet sein, sodass ein Formschluss vorliegt, und gegebenenfalls weitere Befestigungsmittel aufweisen. An die Ausnehmung 30" schließt sich eine Durchtrittöffnung D2 für den Kabelführungsabschnitt K` an, der den Kabelführungsabschnitt K zur innenliegenden Kabelführung K, K' ergänzt und sich zu der Anschlussvorrichtung 9 erstreckt, die in einer entsprechend ausgebildeten Aufnahmeausnehmung 31' an der Anbindungsfläche 31 angeordnet ist, an der die erste Bauteilgruppe B1 mit dem nicht dargestellten Gegenstand verbunden wird.

Der (Gewinde-)Bolzen 5, der in der Gebrauchsanordnung des Drehmomentscharniers 1 durch Eingriff mit der (Gewinde-)Bohrung 15 in der Stirnfläche des ersten Abschnitts 11 des Hohlachsenelements 10 für die lösbare Verbindung des Buchsenelements 30 mit dem Hohlachsenelement 10 sorgt, sowie die Abdeckung 6, die die geschlossene Gehäuseoberfläche des Drehmomentscharniers 1 für eine gewünschte Staub- und Wasserdichtigkeit sowie Abreinigbarkeit ergänzt, werden ebenfalls zu der ersten Bauteilgruppe B1 gezählt.

Die zweite Bauteilgruppe B2 des Drehmomentscharniers 1 in **Fig. 4** **und** **5** umfasst als wesentliche Bauteile das Hohlachsenelement 10, das Reibelement 20, das zweite Buchsenelement 40 und das zweite Verbinderelement 2, das in einer Aufnahmeausnehmung 14' am Hohlachsenelement 10 angeordnet ist. Dort ist die Aufnahmeausnehmung 14' durch einen Abschnitt der Durchtrittöffnung D1 an einer Stirnfläche 14 des ersten Abschnitts 11 ausgebildet (vgl. **Fig. 5**). Die Aufnahmeausnehmung 14' korrespondiert in Form und Abmessung mit dem zweiten Verbinderelement 2, das einen vom kreisrunden Querschnitt abweichenden, nichtrotationssymmetrischen Querschnitt aufweist, sodass das zweite Verbinderelement 2 drehfest in der Aufnahmeausnehmung 14' angeordnet ist. Entsprechend ist auch das Verbinderelement 3 mit einem vom kreisrunden Querschnitt abweichenden, nichtrotationssymmetrischen Querschnitt ausgebildet, was eine entsprechende Form der Aufnahme 30" für das erste Verbinderelement 3 in dem ersten Buchsenelement 30 bedingt. Die Aufnahmeausnehmung 14' und die Aufnahme 30" sind derart positioniert, dass sie in der Gebrauchsanordnung gegenüberliegen, sodass sich die Verbinderelemente 2, 3 beim Zusammenfügen der Bauteilgruppen B1, B2 verbinden.

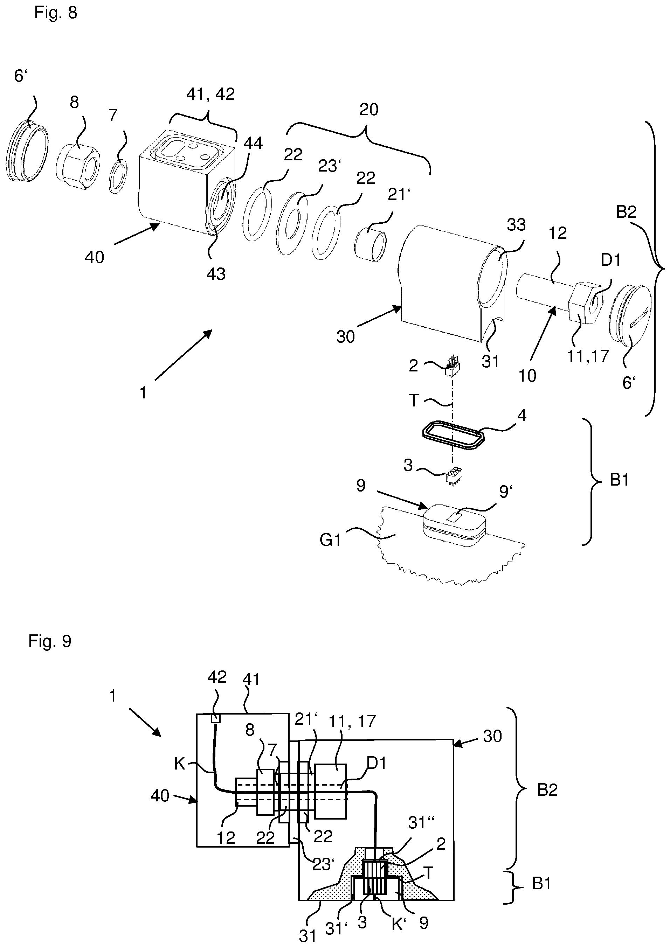

Für eine geschlossene Gehäuseoberfläche des zweiten Buchsenelements 40 (zum Schließen einer in **Fig. 4** nicht sichtbaren Montageöffnung auf der von der Aufnahmeöffnung 44 abgewandten Seite) kann eine nicht dargestellten Abdeckung (entsprechend Abdeckung 6' in **Fig. 8**) vorgesehen sein, die ebenfalls zur zweiten Bauteilgruppe B2 gezählt wird. Das Reibelement 20, bestehend aus Reibring 21 und der zwischen zwei Dichtungen 22 angeordneten Scheibe 23, ist auf dem zweiten Abschnitt 12 des Hohlachsenelements 10 angeordnet, der sich von dem Anschlag 13 in entgegengesetzter Richtung zu Abschnitt 11 erstreckt. Der Reibring 21 ist in der Aufnahmeöffnung 44 des zweiten Buchsenelements 40 befestigt, z. B. eingepresst, sodass bei Drehung ein Reibmoment zwischen der Innenfläche des Reibrings 21 und der Außenfläche des zweiten Abschnitts 12 des Hohlachsenelements 10 erzeugt wird. Die axiale Fixierung des Reibelements 20 erfolgt im Beispiel von **Fig. 4** **und** **5** mittels Tellerfeder 7 bzw. Tellerfederpaket und Schraubmutter 8, die entsprechend auch zur zweiten Bauteilgruppe B2 gehören. Die Tellerfeder 7 sorgt für einen konstanten axialen Anpressdruck.

Beispiele für alternative axiale Befestigungs- und Abdichtungsmöglichkeiten sind in **Fig. 6** an einem einzigen Hohlachsenelement 10 zusammen dargestellt. Diese Kombination der Befestigungs- und Abdichtungsmöglichkeiten ist so nicht zur Realisierung vorgesehen, sondern soll nur unterschiedliche bekannte axiale Befestigungs- und Abdichtungsmöglichkeiten platzsparend figurativ verdeutlichen. Selbstverständlich können einzelne der dargestellte beispielhafte Befestigungs- und Abdichtungsmöglichkeiten in den Ausführungsformen der anderen Beispiele eingesetzt werden, auch erkennt der Fachmann sinnvolle Kombinationsmöglichkeiten der dargestellten Befestigungs- und Abdichtungsmöglichkeiten. So sind in der Darstellung in **Fig. 6** oberhalb und unterhalb der Rotationsachse sowie rechts und links des Anschlags 13 unterschiedliche Beispiele gezeigt. Zur axialen Befestigung am zweiten Abschnitt 12 ist als Alternative zu der bereits genannten Verschraubung mittels Gewinde 12' (Beispiel unterhalb der Rotationsachse) eine Nut 12" dargestellt (Beispiel oberhalb der Rotationsachse), die zum Eingriff mit einem nicht dargestellten Stift vorgesehen ist.

Zur Abdichtung des Reibelements 20 bzw. der Scheibe 23 gegen den Anschlag 13 des Hohlachsenelements 10 kann nicht nur wie in **Fig. 4** dargestellt ein einziger Dichtring als Dichtung 22 eingesetzt werden, es kann auch eine mehrstufige Dichtung 22 mit zwei konzentrischen Dichtringen (in **Fig. 6** Beispiel oberhalb der Rotationsachse), die in Aufnahmenuten 13' an der dem Abschnitt 12 benachbarten Stirnseite des Anschlags 13 angeordnet sind, oder mehr konzentrischen Dichtringen mit entsprechenden Aufnahmenuten vorgesehen sein. Das Beispiel unterhalb der Symmetrieebene in **Fig. 6** zeigt als Dichtung 22 eine Dichtscheibe, die gegen Dichtrippen 13" gepresst wird, die in der dem Abschnitt 12 benachbarten Stirnseite des Anschlags 13 ausgebildet sind.

Als Alternative zur Anordnung eines Schnittstellen-Dichtrings 4 zwischen der dem Abschnitt 11 benachbarten Stirnfläche des Anschlags 13 und dem ersten Buchsenelement 30 (bzw. dessen zum Anschlag 13 weisenden Stirnfläche, wie in **Fig. 4****,** **5** und **7a** dargestellt, zeigt **Fig. 6** einen Dichtring 4 zur Abdichtung der Schnittstelle mit dem nur ausschnittsweise schematisch dargestellten Buchsenelement 30 in einer Umfangsnut 14" am ersten Abschnitt 11 des Hohlachsenelements 10. Zusätzlich oder alternativ dazu kann ein oder können mehrere Schnittstellen-Dichtringe 4 (im gezeigten Beispiel zwei Dichtringe 4) in entsprechenden Umfangsnuten 34' in der Aufnahmeausnehmung 30' des ersten Buchsenelements 30 angeordnet sein, um die Schnittstelle nach dem Einschieben des ersten Abschnitts 11 in die Aufnahmeausnehmung 30' abzudichten.

Durch eine konstruktive Gestaltung eines erfindungsgemäßen Drehmomentscharniers mit fließenden und durch Dichtungen abgedichteten Übergängen zwischen den einzelnen Gehäusekomponenten, d. h. allen Bauteilen, die eine äußere Oberfläche des Drehmomentscharniers bereitstellen (Buchsenelemente 30, 40, Scheibe 23, Anschlag 13, Abdeckungen 6) und deren bevorzugter Ausführung aus Edelstahl bzw. mit einer Edelstahloberfläche wird die Reinigung eines erfindungsgemäßen Drehmomentscharniers, auch mit Desinfektionsmitteln, erheblich vereinfacht. Selbstverständlich ist der Schutzumfang nicht auf diese besonders bevorzugte und vorteilhafte Ausführungsform des Drehmomentscharniers beschränkt. Vielmehr erstreckt sich der Schutzumfang auch auf alle Drehmomentscharniere mit innenliegender Kabelführung, die keine fließenden Übergänge zwischen den Gehäusekomponenten, kein geschlossenes Gehäuse, und keine Abdeckungen aufweisen und nicht aus Edelstahl gefertigt sind, solange das Drehmomentscharnier anspruchsgemäß in zwei reversibel trennbare Bauteilgruppen aufgeteilt ist.

**Fig. 7a und 7b** zeigen mittels lösbarer Verbindungstechniken verbundene erste Buchsenelemente 30 mit dem Hohlachsenelement 10, die alternativ oder zusätzlich zu der in **Fig. 4** **und** **5** gezeigten Verbindungstechnik mit Bolzen 5 und Bohrung 15 eingesetzt werden können, um die Bauteilgruppen bei Überführung in die Gebrauchsanordnung des Drehmomentscharniers 1 lösbar miteinander zu verbinden. In den schematischen Darstellungen von **Fig. 7a und 7b** allerdings ist nur der Ausschnitt des ersten Buchsenelements 30 dargestellt, der die Aufnahme 30' für den ersten Abschnitt 11 des Hohlachsenelements 10, Aufnahme 30" für das erste Steckerelement 3 und die Durchtrittöffnung D2 für den Kabelführungabschnitt K' aufweist, der den Kabelführungsabschnitt K durch die Durchtrittöffnung D1 im Hohlachsenelement 10 bei Kontakt der Steckerelemente 3, 4 zur Bereitstellung der innenliegenden Kabelführung K, K' ergänzt.

In **Fig. 7a** ist als Beispiel für eine lösbare Verbindungstechnik ein im ersten Buchsenelement 30 gelagerter Federstift 5' zum Eingriff in eine im ersten Abschnitt 11 des Hohlachsenelements 10 ausgebildeten Nut 11' dargestellt. Da der Federstift 5' beim Einführen des ersten Abschnitts 11 in die Aufnahme 30' selbsttätig einrastet, kann das Verbinden sehr schnell und einfach erfolgen. Zum Lösen des Rasteingriffs kann ein (nicht dargestellter) Rückzugsmechanismus vorgesehen sein, der den Federstift 5' aus der Nut 11' zurückzieht, sodass das Hohlachsenelement 10 mit dem ersten Abschnitt 11 von dem ersten Buchsenelement 30 getrennt werden kann. Alternativ können Federstift 5' und Nut 11' z. B. mit einer Anschrägung so geformt sein, dass der Federstift 5' bei ausreichendem Zug am Hohlachsenelement 10 der Anschrägung folgend aus der Nut 11' geschoben wird, bis der Rasteingriff gelöst ist.

Ein weiteres Beispiel für eine lösbare Verbindungstechnik des ersten Buchsenelements 30 mit dem Hohlachsenelement 10 ist in **Fig. 7b** gezeigt, in der im Wesentlichen die Bereiche des ersten Buchsenelements 30 und des Hohlachsenelements 10 oberhalb der Rotationsachse dargestellt sind, die das Paar aus Magnetelementen 5" zeigen, die aus magnetischen oder magnetisierbaren Einlässen oder Werkstoffen derart ausgewählt und angeordnet sind, dass eine Anziehungskraft zwischen den Magnetelementen 5' besteht. Das erste Magnetelement 5' ist hierbei an einer dem ersten Abschnitt 11 benachbarten Stirnfläche des Anschlags 13 und das zweite Magnetelement 5' an einer dazu korrespondierenden Fläche an dem ersten Buchsenelement 30 benachbart zu der Aufnahme 30' angeordnet. Form, Anzahl und Anordnung der Magnetelemente ist dabei nicht beschränkt, au-ßer, dass die jeweiligen Magnetelementepaarungen korrespondierend positioniert sind, und, wenn beide Magnetelemente aus magnetischem Werkstoff bzw. Magnete sind, mit unterschiedlichen Polen zueinander weisen.

Aus **Fig. 8 und 9** wird der Aufbau eines erfindungsgemäßen Drehmomentscharniers 1, wie es im Beispiel von **Fig. 2** angedeutet ist, mit einer Schnittstelle T zwischen dem ersten Buchsenelement 30 und einer als Adapter ausgeführten Anschlussvorrichtung 9 deutlich. Die erste Bauteilgruppe B1, die dem ersten Gegenstand G1 zugeordnet ist, weist dabei die als Adapter ausgeführte Anschlussvorrichtung 9 und das erste Verbinderelement 3 auf, das in einer Anschlussbuchse 9' der Anschlussvorrichtung 9 zur Verbindung mit dem Kabelführungsabschnitt K` aufgenommen ist. Die Anschlussvorrichtung 9 ist zur Verbindung mit dem Gegenstand G1 ausgebildet, der eine elektrische/elektronische Schnittstelle (nicht dargestellt) aufweist, durch Montage der Anschlussvorrichtung 9 an dem Gegenstand G1 mit dem Kabelführungsabschnitt K` verbunden wird. Die zur Abdichtung zwischen den Bauteilgruppen B1, B2 an der Schnittstelle T vorgesehene Dichtung 4 ist in diesem Beispiel der ersten Bauteilgruppe B1 zugeordnet, und wird in einer umlaufenden Nut der Anschlussvorrichtung 9 aufgenommen.

Auch hier kommen alternative Abdichtungslösungen in Betracht. Alternativ oder zusätzlich zu einer in einer an der Anschlussvorrichtung 9 umlaufenden Nut aufgenommenen Dichtung 4 können in einer für die Aufnahme der Anschlussvorrichtung 9 ausgebildeten Ausnehmung 31' in dem ersten Buchsenelement 30 eine oder mehrere umlaufende Nuten zur Aufnahme von einer oder mehreren Schnittstellen-Dichtungen 4 ausgebildet sein, vergleichbar mit den im Zusammenhang mit **Fig. 6** beschriebenen Schnittstellenabdichtungslösungen. Alternativ kann eine Flachdichtung (nicht dargestellt) zwischen Anschlussvorrichtung 9 und Buchsenelement 30 eingesetzt werden, ohne dass eine umlaufende Aufnahmenut dafür an der Anschlussvorrichtung 9 oder in der Ausnehmung 31' vorgesehen sind.

Ebenso ist der Einsatz einer außenliegenden Formdichtung 4' möglich, mit der die Schnittstelle zwischen dem ersten Buchsenelement 30 und der dem ersten Gegenstand G1 zugeordneten Anschlussvorrichtung 9, abgedichtet wird, wie in **Fig. 11** skizziert ist. Dort ist ferner zu sehen, dass die Anbindungsfläche 31 des ersten Buchsenelements 30 korrespondierend zu der Kontur des ersten Gegenstands G1 im Bereich der zugeordneten Anschlussvorrichtung 9 ausgeformt ist.

Die Anschlussvorrichtung 9 in dem mit **Fig. 8** dargestellten Beispiel weist mit dem abgerundet rechteckigen Querschnitt eine nichtkreisrunde Form auf und wird bei der Montage an Gegenstand G1 so ausgerichtet, dass die zweite Bauteilgruppe B2 in korrekter Verbindungsposition zum Drehmomentscharnier 1 zur schwenkbaren und elektrischen/elektronischen Verbindung mit dem der zweiten Bauteilgruppe B2 zugeordneten Gegenstand (nicht dargestellt) verbunden werden kann.

Die zweite Bauteilgruppe B2 weist in diesem Beispiel das zweite Buchsenelement 40, das Hohlachsenelement 10, das Reibelement 20 sowie das erste Buchsenelement 30 und das zweite Verbinderelement 2 auf, das hier in einer Aufnahme 31 " in dem ersten Buchsenelement 30 aufgenommen ist, die in Form und Abmessung mit dem zweiten Verbinderelement 2 korrespondiert. Die Aufnahme 31" für das zweite Verbinderelement 2 erstreckt sich von einer Adapterausnehmung 31', die im ersten Buchsenelement 30 in einer zur Anlage an dem ersten Gegenstand G1 vorgesehenen Anbindungsfläche 31 zur Aufnahme der Anschlussvorrichtung 9 ausgebildet ist. Die Adapterausnehmung 31' ist dabei zur lösbaren Aufnahme der Anschlussvorrichtung 9 ausgebildet und korrespondiert in Form und Abmessung mit der Anschlussvorrichtung 9. Die Aufnahme 31" für das zweite Verbinderelement 2 ist dabei so in Bezug zur Adapterausnehmung 31' positioniert, dass die Aufnahme 31" der Anschlussbuchse 9' der Anschlussvorrichtung 9 gegenüberliegt, wenn die Anschlussvorrichtung 9 in der Adapterausnehmung 31' zur Verbindung der Bauteilgruppen B1, B2 aufgenommen ist. Auf diese Weise wird auch in dieser Ausführungsform die innenliegende Kabelführung K, K', die die Gegenstände durch das Drehmomentscharnier 1 verbindet, durch die miteinander verbundenen Verbinderelemente 2, 3 hergestellt, wobei der Abschnitt K', der sich durch die erste Bauteilgruppe B1 erstreckt, den Kabelführungsabschnitt K, der sich durch die zweite Bauteilgruppe B2 erstreckt, ergänzt.

Weitere Bauteile, wie etwa ein Anschlusselement 42 in der Anbindungsfläche 41 zum Anschließen des zweiten Gegenstands, Abdeckungen 6' zum Schaffen einer geschlossenen Gehäuseoberfläche und Befestigungsmittel zur axialen Fixierung des Reibelements 20, wie z. B. Tellerfeder 7 und Schraubmutter 8, gehören entsprechend auch zur zweiten Bauteilgruppe B2 gehören.

Abweichend zu der Ausführungsform, die in **Fig. 4** gezeigt ist, weist das Hohlachsenelement 10 in dem Beispiel von **Fig. 8, 9** und **10** keinen scheibenförmigen Anschlag und ein abweichendes Reibelement 20 auf. Das Hohlachsenelement 10 mit der längsaxialen Durchtrittöffnung D1 weist hier einen ersten Abschnitt 11 auf, der als Kopfabschnitt 17 mit nichtkreisrundem, hier sechseckigen Querschnitt als Schraubkopf ausgebildet ist. In dieser Ausführungsform ist der Kopfabschnitt 17 nicht drehfest im Buchsenelement 30 festgelegt, sondern das Hohlachsenelement 11 ist als freilaufende Achse ausgebildet, die beidseitig angepresst wird, um mit dem Reibelement 20 das Reibmoment zu erzeugen. Bei der Montage wird das durch die Montageöffnung 33 des ersten Buchsenelements 30 eingeführte Hohlachsenelement 11 durch haltenden Eingriff an dem Schraubkopf 17 gegen die Mutter 8 verspannt, wobei die Tellerfeder 7 (bzw. das Tellerfederpaket) als axiale Spannvorrichtung einen konstanten Anpressdruck bereitstellt, der auf das Reibelement 20 wirkt, das auf dem zweiten Abschnitt 12 des Hohlachsenelements 10 im Bereich zwischen den Buchsenelementen 30, 40 angeordnet ist. Die axiale Fixierung kann in alternativen Ausführungsformen anstelle einer Mutter beispielsweise auch durch einen in eine Nut eingreifenden Verbindungsstift bereitgestellt werden. Aus der Durchtrittöffnung D1 des Hohlachsenelements 10 verläuft die Führung des Kabelabschnitts K zu dem in der Aufnahme 31" aufgenommenen zweiten Verbinderelement 2.

Das auf dem zweiten Abschnitt 12 des Hohlachsenelements 10 im Bereich zwischen den Buchsenelementen 30, 40 angeordnete Reibelement 20 weist in diesem mit **Fig. 8, 9** und **10** dargestellten Beispiel einen Lagerring 21' auf, der sich hier in die Aufnahmeöffnungen 33', 44 der Buchsenelemente 30, 40 erstreckt und dazwischen die Reibscheibe 23' aufnimmt, die hier vorzugsweise aus einem PTFE-Material oder einem vergleichbaren Material gefertigt ist, bei dem vorteilhaft die Haftreibung der Gleitreibung entspricht, sodass keine Reibverluste auftreten. Bei Drehung wird durch den von der Tellerfeder 7 bereitgestellten axialen Anpressruck ein Reibmoment zwischen der Reibscheibe 23 und den benachbarten Flächen der Buchsenelemente 30, 40 bzw. den dazwischen angeordneten Dichtungen 22 erzeugt, die in jeweils einer entsprechenden Dichtungsnut am jeweiligen Buchsenelement 30, 40 angeordnet sind (ringförmige Nut 43 an dem zweiten Buchsenelement 40 und ringförmige Nut 34 an dem ersten Buchsenelement 30).

Selbstverständlich sind die im Zusammenhang mit **Fig. 4** und **8** beschriebenen unterschiedlichen Hohlachsenelement- und Reibelementvarianten nicht auf die jeweilige Ausführungsform der Schnittstellenposition beschränkt. So kann ein Drehmomentscharnier mit der Schnittstelle zwischen Hohlachsenelement und erstem Buchsenelement auch mit einem alternativen Reibelement (Reibscheibe und Lagerring wie in **Fig. 8** oder ein anderes Reibelement aus dem Stand der Technik) ausgebildet sein. Umgekehrt kann auch ein Drehmomentscharnier mit der Schnittstelle zwischen dem ersten Buchsenelement und einer Anschlussvorrichtung mit einem in einem Buchsenelement drehfest festgelegten Hohlachsenelement oder dem in Zusammenhang mit **Fig. 4** beschriebenen Reibelement 20 (oder einem anderen Reibelement aus dem Stand der Technik) oder beidem ausgebildet sein.

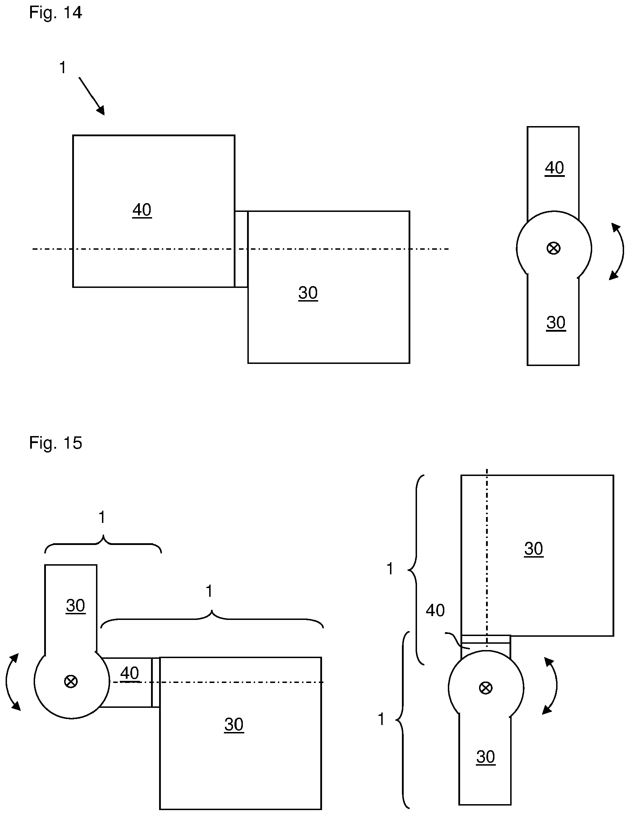

**Fig. 14** verdeutlicht durch die schematische Darstellung von zwei (über ein nicht dargestelltes Hohlachsenelement) verbundenen Buchsenelemente 30, 40 die Schwenkachse, die durch das erfindungsgemäßen Drehmomentscharnier 1 bereitgestellt wird. Die in **Fig. 15** angedeutete Weiterbildung einer erfindungsgemäßen Vorrichtung stellt zwei senkrecht zueinander ausgebildete Schwenkachsen bereit, indem quasi zwei erfindungsgemäße Drehmomentscharniere 1 "hintereinander geschaltet" werden, wobei nur ein zweites Buchsenelement 40 vorgesehen ist, das zu beiden Seiten über jeweils ein Hohlachsenelement mit jeweils einem ersten Buchsenelement 30 verbunden ist. Dies kann auch als eine Sonderform einer erfindungsgemäßen Vorrichtung angesehen werden, die aus zwei Gegenständen G1, G2 besteht, die über zumindest ein erfindungsgemäßes Drehmomentscharnier 1 schwenkbar und elektrisch/elektronische verbunden sind, wobei eins der ersten Buchsenelemente 30 als einer der Gegenstände G1, G2 definiert wird.

### BEZUGSZEICHENLISTE

- 1: Drehmomentscharnier
- 2, 3, 2`, 3': Verbinderelemente, Stirnseiten
- 4, 4': (Schnittstellen-)Dichtung, Formdichtung
- 5, 5`, 5": Bolzen, Federstift, Magnetpaar
- 6: Abdeckung
- 7, 8: Tellerfeder(paket), Mutter
- 9, 9': Anschlussvorrichtung, Anschlussbuchse
- 10: Hohlachsenelement
- 11, 11': Erster Abschnitt, Rastausnehmung
- 12, 12', 12": Zweiter Abschnitt, Gewinde, Nut
- 13, 13', 13": Anschlag, Ringnut, Rippe
- 14, 14`, 14": Stirnfläche, Aufnahmeausnehmung, Nut
- 15: Bohrung
- 16: Abflachung
- 17: Kopfabschnitt
- D1: Durchtrittöffnung
- 20: Reibelement
- 21, 22, 23: Reibring, Dichtung, Scheibe
- 21 ', 23': Gleit-/Lagerring, Reibscheibe
- 30: Erstes Buchsenelement
- 30`, 30": Aufnahmen erster Abschnitt erstes Verbinderelement
- 31: Anbindungsfläche
- 31', 31": Aufnahmen Adapter, erstes Verbinderelement
- 32: Bohrung
- 33, 33': Öffnung, Durchtrittöffnung
- 34, 34`: Aufnahmenut
- 40: Zweites Buchsenelement
- 41: Anbindungsfläche
- 42: Anschlusselement
- 43: Ringnut
- 44: Aufnahmeöffnung
- B1, B2: Erste Bauteilgruppe, zweite Bauteilgruppe
- T: Schnittstelle
- K, K': Kabelführung
- G1, G2: Gegenstand
- D1, D2: Durchtrittöffnungen Hohlachsenelement, erstes Buchsenelement
- P, A: Kontaktpin, Kontaktanschluss
- N, S: Permanentmagnet Nordpol, Südpol
- H: Näherungssensor
- F₁, F₂: Formelemente

## Patentansprüche

1. Vorrichtung, bestehend aus zwei Gegenständen (G1, G2), die über zumindest ein Drehmomentscharnier (1) schwenkbar verbunden sind, wobei das Drehmomentscharnier (1) eine innenliegende Kabelführung (K, K') aufweist, die in einer Gebrauchsanordnung des Drehmomentscharniers (1), in der die Gegenstände (G1, G2) über das Drehmomentscharnier (1) verbunden sind, eine elektrische und/oder elektronische Anbindung der Gegenstände (G1, G2) bereitstellt,
wobei das Drehmomentscharnier (1) ein Hohlachsenelement (10) und zumindest ein erstes Buchsenelement (30) und zumindest ein zweites Buchsenelement (40), die zur Verbindung mit den Gegenständen (G1, G2) ausgebildet sind, aufweist,
wobei das Hohlachsenelement (10) einen ersten Abschnitt (11), der in dem ersten Buchsenelement (30) angeordnet ist, und einen zweiten Abschnitt (12), der sich in das zweite Buchsenelement (40) erstreckt, aufweist, und wobei sich die innenliegende Kabelführung (K, K`) durch eine längsaxiale Durchtrittsöffnung (D1) des Hohlachsenelements (10) erstreckt,
**dadurch gekennzeichnet, dass**
das Drehmomentscharnier (1) zumindest zwei an einer Schnittstelle (T) reversibel trennbare und verbindbare Bauteilgruppen (B1, B2) aufweist, von denen eine erste Bauteilgruppe (B1) dem ersten Gegenstand (G1) und eine zweite Bauteilgruppe (B2) dem zweiten Gegenstand (G2) in der Gebrauchsanordnung zugeordnet ist, wobei die innenliegende Kabelführung (K, K') an der Schnittstelle (T) zumindest ein reversibel trennbares und verbindbares elektrisches und/oder elektronisches Verbinderelementepaar aus einem ersten, der ersten Bauteilgruppe (B1) zugeordneten Verbinderelement (3) und einem damit korrespondierenden zweiten, der zweiten Bauteilgruppe (B2) zugeordneten Verbinderelement (2) aufweist, und
das Drehmomentscharnier (1) ein Reibelement (20) aufweist, das an dem zweiten Abschnitt (12) in einem Bereich zwischen dem ersten und dem zweiten Buchsenelement (30, 40) angeordnet ist, und
wobei das Hohlachsenelement (10)
- an dem ersten Abschnitt (11) drehfest mit dem ersten Buchsenelement (30) verbunden ist und der zweite Abschnitt (12) des Hohlachsenelements (10) schwenkbar in dem zweiten Buchsenelement (40) aufgenommen ist, oder
- als freilaufende Achse ausgebildet ist, die mit dem ersten Abschnitt (11) in dem ersten Buchsenelement (30) und mit dem zweiten Abschnitt (12) in dem zweiten Buchsenelement (40) schwenkbar aufgenommen ist,
wobei die Schnittstelle (T) zwischen dem Hohlachsenelement (10) und dem ersten Buchsenelement (30) vorgesehen ist, wobei die drehfeste Verbindung des Hohlachsenelements (10) mit dem ersten Buchsenelement (30) lösbar ausgebildet ist,
wobei
die erste Bauteilgruppe (B1) zumindest das erste Buchsenelement (30) und das erste Verbinderelement (3) aufweist, und
die zweite Bauteilgruppe (B2) zumindest das zweite Buchsenelement (40), das zweite Verbinderelement (2), das Hohlachsenelement (10) und das Reibelement (20) aufweist.

2. Vorrichtung nach Anspruch 1,
**dadurch gekennzeichnet, dass**
das Drehmomentscharnier (1) eine zum elektrischen und/oder elektronischen Anschluss an den ersten Gegenstand (G1) ausgebildete Anschlussvorrichtung (9) und ein zum elektrischen und/oder elektronischen Anschluss an den zweiten Gegenstand (G2) ausgebildetes Anschlusselement (42) aufweist, wobei
die Anschlussvorrichtung (9) in dem ersten Buchsenelement (30) angeordnet und mit dem ersten Verbinderelement (3) verbunden ist, und
das Anschlusselement (42) in dem zweiten Buchsenelement (40) angeordnet und mit dem zweiten Verbinderelement (2) verbunden ist.

3. Vorrichtung nach Anspruch 1 oder 2, **dadurch gekennzeichnet, dass**
eines der beiden Verbinderelemente (2, 3) an einer dem anderen Verbinderelement (2, 3) zugewandten Stirnseite (2', 3`) eine Anzahl von Kontaktpins (P) aufweist, die zumindest der Anzahl an Einzelleitungen der Kabelführung (K, K') entspricht, und das andere Verbinderelement (2, 3) an seiner dem Verbinderelement (2, 3) zugewandten Stirnseite (2', 3`) eine entsprechend korrespondierende Anzahl an Kontaktabschnitten (A) aufweist,
wobei
- beide Verbinderelemente (3, 2) einen gleichen nichtkreisrunden, bevorzugt nichtrotationsymmetrischen, Querschnitt haben, und/oder
- jedes Verbinderelement (3, 2) an der Stirnseite (3', 2') zumindest zwei Permanentmagnete (N, S) mit einer vorbestimmten Anordnung von Nord- und Südpol aufweist.

4. Vorrichtung nach Anspruch 3,
**dadurch gekennzeichnet, dass**
- die Verbinderelemente (2, 3) zusätzliche Steuerkontaktpins (P_{Steuer}) und Steuerkontaktabschnitte (A_{Steuer}) aufweisen, deren Anordnung an der jeweiligen Stirnseite (2', 3`) in Bezug auf die den Einzelleitungen zugeordneten Kontaktpins (P_{I}) und Kontaktabschnitte (A) vorbestimmt ist, wobei Steuerleitungen, die den Steuerkontaktpins (P_{Steuer}) und Steuerkontaktabschnitten (A_{Steuer}) zugeordnet sind, mit einer Freischalteinrichtung für die Einzelleitungen verbunden sind, oder
- zumindest eines der beiden Verbinderelemente (2, 3) einen Näherungssensor (H) aufweist, der über Steuerleitungen mit einer Freischalteinrichtung für die Einzelleitungen verbunden ist.

5. Vorrichtung nach Anspruch 4,
**dadurch gekennzeichnet, dass**
- die Steuerkontaktpins (P_{Steuer}) und Steuerkontaktabschnitte (A_{Steuer}) in ihrer Form von einer Form der Kontaktpins (P) und Kontaktabschnitte (A) abweichen, oder dass
- das erste Verbinderelement (3) an der Stirnseite (3') den Steuerkontaktabschnitten (A_{Steuer}) zugeordnete erste Gegenformelemente (F₁') und den Kontaktabschnitten (A) zugeordnete zweite Gegenformelemente (F₂') und das zweite Verbinderelement (2) an der Stirnseite (2') den Steuerkontaktpins (P_{Steuer}) zugeordnete erste Formelemente (F₁) und den Kontaktpins (P) zugeordnete zweite Formelemente (F₂) aufweisen, wobei die Gegenformelemente (F₁', F₂') und die Formelemente (F₁, F₂) in Abmessungen und Lage an den Stirnseiten (2', 3`) korrespondierend zueinander ausgebildet sind.

6. Vorrichtung nach Anspruch 5,
**dadurch gekennzeichnet, dass**
die Steuerkontaktpins (P_{Steuer}) und Steuerkontaktabschnitte (A_{Steuer}) in Bezug auf die Kontaktpins (P) und Kontaktabschnitte (A) als nacheilender Kontakt ausgebildet sind.

7. Vorrichtung nach zumindest einem der Ansprüche 1 bis 6,
**dadurch gekennzeichnet, dass**
das Drehmomentscharnier (1) zumindest eine Dichtung (4), die der ersten oder der zweiten Bauteilgruppe (B1, B2) zugeordnet ist, an der Schnittstelle (T) aufweist.

8. Vorrichtung nach zumindest einem der Ansprüche 1 bis 7,
**dadurch gekennzeichnet, dass**
die lösbare drehfeste Verbindung des Hohlachsenelements (10) mit dem ersten Buchsenelement (30), das eine Aufnahme (30`) für den ersten Abschnitt (11) des Hohlachsenelements (10) aufweist, durch eine formschlüssige und/oder kraftschlüssige und/oder magnetische Verbindungstechnik bereitgestellt wird,
wobei bevorzugt
- der erste Abschnitt (11) des Hohlachsenelements (10) einen nichtkreisrunden, bevorzugt nichtrotationssymmetrischen, Querschnitt hat und die Aufnahme (30`) für den ersten Abschnitt (11) des Hohlachsenelements (10) im ersten Buchsenelement (30) einen entsprechend geformten nichtkreisrunden, bevorzugt nichtrotationssymmetrischen, Querschnitt aufweist, und/oder
- der erste Abschnitt (11) des Hohlachsenelements (10) und das erste Buchsenelement (30) miteinander fluchtende Bohrungen (15, 32) aufweisen, in denen ein Bolzen (5) angeordnet ist, und/oder
- der erste Abschnitt (11) des Hohlachsenelements (10) eine Rastausnehmung (11') zum Eingriff eines federgelagerten Bolzens (5') aufweist, der in einer mit der Rastausnehmung (11') korrespondierenden Position in der Aufnahme (30') des ersten Buchsenelements (30) gelagert ist, und/oder
- ein erstes Magnetelement (5') an einer dem ersten Abschnitt (11) benachbarten Fläche des Anschlags (13) und ein zweites Magnetelement (5') an einer dazu korrespondierenden Fläche an dem ersten Buchsenelement (30) benachbart zu der Aufnahme (30`) angeordnet ist, wobei das erste und das zweite Magnetelement (5') derart aus magnetischen und magnetisierbaren Materialien ausgewählt und angeordnet sind, dass eine Anziehungskraft zwischen dem ersten und dem zweiten Magnetelement (5') bereitgestellt wird.

9. Vorrichtung nach zumindest einem der Ansprüche 1 bis 8,
**dadurch gekennzeichnet, dass**
das zweite Verbinderelement (2) in einer Aufnahmeausnehmung (14') angeordnet ist, die durch einen Abschnitt der Durchtrittöffnung (D1) an einer Stirnfläche (14) des ersten Abschnitts (11) des Hohlachsenelements (10) gebildet wird und die in Form und Abmessung mit dem zweiten Verbinderelement (2) korrespondiert und das erste Buchsenelement (30) eine Aufnahme (30") für das erste Verbinderelement (3) aufweist, die in Form und Abmessung mit dem ersten Verbinderelement (3) korrespondiert und gegenüberliegend zu der Aufnahmeausnehmung (14') an der Stirnfläche (14) des ersten Abschnitts (11) des Hohlachsenelements (10) positioniert ist.

10. Vorrichtung nach Anspruch 9,
**dadurch gekennzeichnet, dass**
die Aufnahmeausnehmung (14') im Hohlachsenelement (10) für das zweite Verbinderelement (2) und die Aufnahme (30") im ersten Buchsenelement (30) für das erste Verbinderelement (3) einen Querschnitt aufweisen, der entsprechend dem Querschnitt des jeweiligen ersten und zweiten Verbinderelements (3, 2) geformt ist.

11. Drehmomentscharnier (1) zur Verwendung in der Vorrichtung nach zumindest einem der Ansprüche 1 bis 10.

12. Verfahren zur Verwendung eines Drehmomentscharniers (1) nach Anspruch 11, mit innenliegender Kabelführung (K,
K') zur schwenkbaren sowie elektrischen und/oder elektronischen Verbindung zweier Gegenstände (G1, G2), wobei ein reversibles Trennen und Verbinden der Gegenstände (G1, G2) an einer Schnittstelle (T) durch das an der Schnittstelle (T) in die Bauteilgruppen (B1, B2) aufgeteilte Drehmomentscharnier (1) bereitgestellt wird, von denen die erste Bauteilgruppe (B1) dem ersten Gegenstand (G1) und die zweite Bauteilgruppe (B2) dem zweiten Gegenstand (G2) zugeordnet wird, und ein reversibles Trennen und Verbinden des zumindest einen elektrischen und/oder elektronischen Verbinderelementepaars der innenliegenden Kabelführung (K, K') an der Schnittstelle (T) umfasst, das aus dem ersten, der ersten Bauteilgruppe (B1) zugeordneten Verbinderelement (3) und dem damit korrespondierenden/dazu komplementären zweiten, der zweiten Bauteilgruppe (B2) zugeordneten Verbinderelement (2) besteht.

## Claims

1. A device consisting of two objects (G1, G2), which are pivotably connected via at least one torque hinge (1), whereby the torque hinge (1) has an inner cable guide (K, K'), which provides for an electrical and/or electronic connection of the objects (G1, G2) in a use arrangement of the torque hinge (1), in which the objects (G1, G2) are connected via the torque hinge (1),
whereby the torque hinge (1) has a hollow-pin element (10) and at least one first bush element (30) and at least one second bush element (40), which are formed for connection to the objects (G1, G2),
whereby the hollow-pin element (10) has a first section (11), which is arranged in the first bush element (30), and a second section (12), which extends into the second bush element (40), and whereby the inner cable guide (K, K') extends through a longitudinally axial passage opening (D1) of the hollow-pin element (10), **characterised in that**
the torque hinge (1) has at least two component groups (B1, B2) that are reversibly disconnectable and connectable at an interface (T), of which a first component group (B1) is allocated to the first object (G1) and a second component group (B2) is allocated to the second object (G2) in the use arrangement, whereby the inner cable guide (K, K') has, at the interface (T), at least one reversibly disconnectable and connectable electrical and/or electronic connector element pair of a first connector element (3) allocated to the first component group (B1) and a second connector element (2) corresponding thereto and allocated to the second component group (B2), and
the torque hinge (1) has a friction element (20), which is arranged on the second section (12) in a region between the first and the second bush element (30, 40), and whereby the hollow-pin element (10)
- is connected, at the first section (11), in a rotationally fixed manner to the first bush element (30), and the second section (12) of the hollow-pin element (10) is pivotably received in the second bush element (40),
- or is formed as free-running pin, which is pivotably received with the first section (11) in the first bush element (30) and with the second section (12) in the second bush element (40),
whereby the interface (T) is provided between the hollow-pin element (10) and the first bush element (30), whereby the rotationally fixed connection of the hollow-pin element (10) to the first bush element (30) is formed to be releasable,
whereby
the first component group (B1) has at least the first bush element (30) and the first connector element (3), and
the second component group (B2) has at least the second bush element (40), the second connector element (2), the hollow-pin element (10), and the friction element (20).

2. The device according to claim 1,
**characterised in that**
the torque hinge (1) has a connection device (9) formed for the electrical and/or electronic connection to the first object (G1) and a connection element (42) formed for the electrical and/or electronic connection to the second object (G2), whereby the connection device (9) is arranged in the first bush element (30) and is connected to the first connector element (3), and
the connection element (42) is arranged in the second bush element (40) and is connected to the second connector element (2).

3. The device according to claim 1 or 2,
**characterised in that**
one of the two connector elements (2, 3) has, on an end face (2', 3') facing the other connector element (2, 3), a number of contact pins (P), which corresponds at least to the number of individual lines of the cable guide (K, K'), and the other connector element (2, 3) has, on its end face (2', 3') facing the connector element (2, 3), a correspondingly corresponding number of contact sections (A),
whereby
- both connector elements (3, 2) have an identical non-circular, preferably non-rotationally symmetrical, cross-section, and/or
- each connector element (3, 2) has, on the end face (3', 2'), at least two permanent magnets (N, S) with a predetermined arrangement of north and south pole.

4. The device according to claim 3,
**characterised in that**
- the connector elements (2, 3) have additional control contact pins (P_{control}) and control contact sections (A_{control}), the arrangement of which on the respective end face (2', 3') is predetermined with respect to the contact pins (P,) and contact sections (A) allocated to the individual lines, whereby control lines, which are allocated to the control contact pins (P_{control}) and control contact sections (A_{control}), are connected to a disconnecting means for the individual lines, or
- at least one of the two connector elements (2, 3) has a proximity sensor (H), which is connected via control lines to a disconnecting means for the individual lines.

5. The device according to claim 4,
**characterised in that**
- the control contact pins (P_{control}) and control contact sections (A_{control}) differ in their shape from a shape of the contact pins (P) and contact sections (A),
or that
- on the end face (3'), the first connector element (3) has first mating shaping elements (F₁') allocated to the control contact sections (A_{control}) and second mating shaping elements (F₂') allocated to the contact sections (A), and, on the end face (2'), the second connector element (2) has first shaping elements (F₁) allocated to the control contact pins (P_{control}) and second shaping elements (F₂) allocated to the contact pins (P), whereby the mating shaping elements (F₁', F₂') and the shaping elements (F₁, F₂) are formed to correspond to one another in dimensions and position on the end faces (2', 3').

6. The device according to claim 5,
**characterised in that**
the control contact pins (P_{control}) and control contact sections (A_{control}) are formed as lagging contact with respect to the contact pins (P) and contact sections (A).

7. The device according to at least one of claims 1 to 6,
**characterised in that**
the torque hinge (1) has, at the interface (T), at least one seal (4), which is allocated to the first or the second component group (B1, B2).

8. The device according to at least one of claims 1 to 7,
**characterised in that**
the releasable rotationally fixed connection of the hollow-pin element (10) to the first bush element (30), which has a receptacle (30') for the first section (11) of the hollow-pin element (10), is provided by means of a positive and/or nonpositive and/or magnetic connection technology,
whereby preferably
- the first section (11) of the hollow-pin element (10) has a non-circular, preferably non-rotationally symmetrical, cross-section, and the receptacle (30') for the first section (11) of the hollow-pin element (10) in the first bush element (30) has a correspondingly shaped non-circular, preferably non-rotationally symmetrical, cross-section, and/or
- the first section (11) of the hollow-pin element (10) and the first bush element (30) have bores (15, 32) that are aligned with one another, in which a bolt (5) is arranged,
and/or
- the first section (11) of the hollow-pin element (10) has a detent recess (11') for engaging with a spring-mounted bolt (5'), which is mounted in a position corresponding to the detent recess (11') in the receptacle (30') of the first bush element (30), and/or
- a first magnetic element (5') is arranged on a surface of the stop (13) adjacent to the first section (11), and a second magnetic element (5') is arranged on a corresponding surface on the first bush element (30) adjacent to the receptacle (30'), whereby the first and the second magnetic element (5') are selected and arranged from magnetic and magnetisable materials in such a way that a force of attraction is provided between the first and the second magnetic element (5').

9. The device according to at least one of claims 1 to 8,
**characterised in that**
the second connector element (2) is arranged in a receptacle recess (14'), which is formed by a section of the passage opening (D1) at an end face (14) of the first section (11) of the hollow-pin element (10) and which corresponds in shape and dimension to the second connector element (2), and the first bush element (30) has a receptacle (30") for the first connector element (3), which corresponds in shape and dimension to the first connector element (3) and which is positioned opposite the receptacle recess (14') on the end face (14) of the first section (11) of the hollow-pin element (10).

10. The device according to claim 9,
**characterised in that**
the receptacle recess (14') in the hollow-pin element (10) for the second connector element (2) and the receptacle (30") in the first bush element (30) for the first connector element (3) have a cross-section, which is formed according to the cross-section of the respective first and second connector elements (3, 2).

11. A torque hinge (1) for use in the device according to at least one of claims 1 to 10.

12. A method for use of a torque hinge (1) according to claim 11, comprising an internal cable guide (K, K') for the pivotable as well as electrical and/or electronic connection of two objects (G1, G2),
whereby a reversible disconnecting and connecting of the objects (G1, G2) at an interface (T) is provided by the torque hinge (1), which is divided at the interface (T) into the component groups (B1, B2), of which the first component group (B1) is allocated to the first object (G1) and the second component group (B2) is allocated to the second object (G2), and comprises a reversible separating and connecting of the at least one electrical and/or electronic connector element pair of the internal cable guide (K, K') at the interface (T), which consists of the first connector element (3) allocated to the first component group (B1) and the corresponding/complementary second connector element (2) allocated to the second component group (B2).

## Revendications

1. Dispositif composé de deux objets (G1, G2) qui sont reliés de manière pivotante par au moins une charnière à couple (1),
la charnière à couple (1) comprenant un guide-câble interne (K, K') qui, dans une disposition d'utilisation de la charnière à couple (1) dans laquelle les objets (G1, G2) sont reliés par la charnière à couple (1), fournit une liaison électrique et/ou électronique des objets (G1, G2),
la charnière à couple (1) comprenant un élément d'axe vertical (10) et au moins un premier élément de prise (30) et au moins un deuxième élément de prise (40) conçus pour être reliés aux objets (G1, G2),
l'élément d'axe vertical (10) comprenant une première section (11) disposée dans le premier élément de prise (30), et une deuxième section (12) s'étendant dans le deuxième élément de prise (40), et le guide-câble interne (K, K') s'étendant à travers une ouverture de passage dans le sens de l'axe longitudinal (D1) de l'élément d'axe vertical (10),
**caractérisé en ce que**
la charnière à couple (1) présente au moins deux groupes de composants (B1, B2) séparables et connectables de manière réversible à une interface (T), dont un premier groupe de composants (B1) est associé au premier objet (G1) et un deuxième groupe de composants (B2) au deuxième objet (G2) dans la disposition d'utilisation, le guide-câble interne (K, K') présentant, à l'interface (T), au moins une paire d'éléments de connexion électriques et/ou électroniques séparables et connectables de manière réversible, composée d'un premier élément de connexion (3) associé au premier groupe de composants (B1) et d'un deuxième élément de connexion (2) correspondant, associé au deuxième groupe de composants (B2), et la charnière à couple (1) comprend un élément de friction (20) disposé sur la deuxième section (12) dans une zone entre les premier et deuxième éléments de prise (30, 40), et
l'élément d'axe vertical (10)
- étant reliée de manière solidaire en rotation au premier élément de prise (30) sur la première section (11) et la deuxième section (12) de l'élément d'axe vertical (10) étant logée de manière pivotante dans le deuxième élément de prise (40), ou
- étant conçu sous la forme d'un axe libre, qui est logé de manière pivotante avec la première section (11) dans le premier élément de prise (30) et avec la deuxième section (12) dans le deuxième élément de prise (40),
l'interface (T) étant prévue entre l'élément d'axe vertical (10) et le premier élément de prise (30), la liaison solidaire en rotation de l'élément d'axe vertical (10) avec le premier élément de prise (30) étant conçue de manière amovible,
le premier groupe de composants (B1) comprenant au moins le premier élément de prise (30) et le premier élément de connexion (3), et
le deuxième groupe de composants (B2) comprenant au moins le deuxième élément de prise (40), le deuxième élément de connexion (2), l'élément d'axe vertical (10) et l'élément de friction (20).

2. Dispositif selon la revendication 1,
**caractérisé en ce que**
la charnière à couple (1) présente un dispositif de raccordement (9) conçu pour le raccordement électrique et/ou électronique au premier objet (G1), et un élément de raccordement (42) conçu pour le raccordement électrique et/ou électronique au deuxième objet (G2),
le dispositif de raccordement (9) étant disposé dans le premier élément de prise (30) et étant connecté au premier élément de connexion (3), et
l'élément de raccordement (42) étant disposé dans le deuxième élément de prise (40) et étant connecté au deuxième élément de connexion (2).

3. Dispositif selon la revendication 1 ou 2,
**caractérisé en ce que**
l'un des deux éléments de connexion (2, 3) présente, sur une face frontale (2', 3') tournée vers l'autre élément de connexion (2, 3), un nombre de broches de contact (P) qui correspond au moins au nombre de lignes individuelles du guide-câble (K, K'), et l'autre élément de connexion (2, 3) présente, sur sa face frontale (2', 3') tournée vers l'élément de connexion (2, 3), un nombre correspondant de sections de contact (A),
les deux éléments de connexion (3, 2) ayant une même section transversale non circulaire, de préférence non symétrique en rotation, et/ou chaque élément de connexion (3, 2) présentant sur la face frontale (3', 2') au moins deux aimants permanents (N, S) avec une disposition prédéterminée des pôles nord et sud.

4. Dispositif selon la revendication 3,
**caractérisé en ce que**
- les éléments de connexion (2, 3) présentent des broches de contact de commande (Pₛₜₑᵤₑᵣ) et des sections de contact de commande (Aₛₜₑᵤₑᵣ) supplémentaires, dont la disposition sur la face frontale respective (2', 3') est prédéterminée par rapport aux broches de contact (P,) et aux sections de contact (A) associées aux lignes individuelles, des lignes de commande associées aux broches de contact de commande (Pₛₜₑᵤₑᵣ) et aux sections de contact de commande (Aₛₜₑᵤₑᵣ) étant reliées à un dispositif de déconnexion pour les lignes individuelles, ou
- au moins l'un des deux éléments de connexion (2, 3) comporte un capteur de proximité (H) qui est relié par des lignes de commande à un dispositif de déconnexion pour les lignes individuelles.

5. Dispositif selon la revendication 4,
**caractérisé en ce que**
- les broches de contact de commande (Pₛₜₑᵤₑᵣ) et les sections de contact de commande (Aₛₜₑᵤₑᵣ) ont une forme différente d'une forme des broches de contact (P,) et des sections de contact (A),
ou **en ce que**
- le premier élément de connexion (3) présente, sur la face frontale (3'), des premiers éléments de contre-forme (F₁') associés aux sections de contact de commande (Aₛₜₑᵤₑᵣ) et des deuxièmes éléments de contre-forme (F₂') associés aux sections de contact (A), et le deuxième élément de connexion (2) présente, sur la face frontale (2'), des premiers éléments de forme (F₁) associés aux broches de contact de commande (Pₛₜₑᵤₑᵣ) et des deuxièmes éléments de forme (F₂) associés aux broches de contact (P), les éléments de contre-forme (F₁', F₂') et les éléments de forme (F₁, F₂) étant conçus de manière à se correspondre en dimensions et en position sur les faces frontales (2', 3')

6. Dispositif selon la revendication 5,
**caractérisé en ce que**
les broches de contact de commande (Pₛₜₑᵤₑᵣ) et les sections de contact de commande (Aₛₜₑᵤₑᵣ) sont formées comme un contact retardé par rapport aux broches de contact (P) et aux sections de contact (A).

7. Dispositif selon au moins l'une des revendications 1 à 6,
**caractérisé en ce que**
la charnière à couple (1) comporte, à l'interface (T), au moins un joint (4) associé au premier ou au deuxième groupe de composants (B1, B2).

8. Dispositif selon au moins l'une des revendications 1 à 7,
**caractérisé en ce que**
la liaison solidaire en rotation amovible de l'élément d'axe vertical (10) avec le premier élément de prise (30), qui présente un logement (30') pour la première section (11) de l'élément d'axe vertical (10), est fournie par une technique de liaison par complémentarité de forme et/ou par adhérence et/ou magnétique,
de préférence
- la première section (11) de l'élément d'axe vertical (10) ayant une section transversale non circulaire, de préférence non symétrique en rotation, et le logement (30') pour la première section (11) de l'élément d'axe vertical (10) dans le premier élément de prise (30) présentant une section transversale non circulaire, de préférence non symétrique en rotation, de forme correspondante et/ou
- la première section (11) de l'élément d'axe vertical (10) et le premier élément de prise (30) présentant des alésages (15, 32) alignés entre eux, dans lesquels est disposé un boulon (5), et/ou
- la première section (11) de l'élément d'axe vertical (10) présentant un évidement d'encliquetage (11') pour l'engagement d'un boulon (5') monté sur ressort, qui est logé dans une position correspondant à l'évidement d'encliquetage (11') dans le logement (30') du premier élément de prise (30), et/ou
- un premier élément magnétique (5') étant disposé sur une surface de la butée (13) adjacente à la première section (11) et un deuxième élément magnétique (5') étant disposé sur une surface correspondante sur le premier élément de prise (30) adjacent au logement (30'), les premier et deuxièmes éléments magnétiques (5') étant sélectionnés à partir de matériaux magnétiques et magnétisables et disposés de manière à fournir une force d'attraction entre le premier et le deuxième élément magnétique (5').

9. Dispositif selon au moins l'une des revendications 1 à 8,
**caractérisé en ce que**
le deuxième élément de connexion (2) est disposé dans un évidement de logement (14') qui est formé par une section de l'ouverture de passage (D1) sur une face frontale (14) de la première section (11) de l'élément d'axe vertical (10) et qui correspond en forme et en dimension au deuxième élément de connexion (2) et le premier élément de prise (30) présente un logement (30") pour le premier élément de connexion (3), qui correspond en forme et en dimension au premier élément de connexion (3) et qui est positionné en face de l'évidement de logement (14') sur la face frontale (14) de la première section (11) de l'élément d'axe vertical (10).

10. Dispositif selon la revendication 9,
**caractérisé en ce que**
l'évidement de logement (14') dans l'élément d'axe vertical (10) pour le deuxième élément de connexion (2) et le logement (30") dans le premier élément de prise (30) pour le premier élément de connexion (3) ont une section transversale qui est formée en fonction de la section transversale du premier et du deuxième élément de connexion respectif (3, 2).

11. Charnière à couple (1) destinée à être utilisée dans le dispositif selon au moins l'une des revendications 1 à 10.

12. Procédé d'utilisation d'une charnière à couple (1) selon la revendication 11, avec un guide-câble interne (K, K") pour la liaison pivotante ainsi qu'électrique et/ou électronique de deux objets (G1, G2), une séparation et une liaison réversibles des objets (G1, G2) étant mises à disposition à une interface (T) par la charnière à couple (1) divisée à l'interface (T) en groupes de composants (B1, B2), dont le premier groupe de composants (B1) est attribué au premier objet (G1) et le deuxième groupe de composants (B2) au deuxième objet (G2), et comprenant une séparation et une connexion réversibles de l'au moins une paire d'éléments de connexion électriques et/ou électroniques du guide-câble intérieur (K, K') à l'interface (T), qui se compose du premier élément de connexion (3) associé au premier groupe de composants (B1) et du deuxième élément de connexion (2) correspondant/complémentaire à celui-ci, associé au deuxième groupe de composants (B2).
